(19) Europäisches Patentamt
European Patent Office
Office européen des brevets

(11) **EP 2 527 949 A1**

## (12) EUROPEAN PATENT APPLICATION
published in accordance with Art. 153(4) EPC

(43) Date of publication:
**28.11.2012 Bulletin 2012/48**

(21) Application number: **11734566.0**

(22) Date of filing: **13.01.2011**

(51) Int Cl.:
*G05F 1/67* (2006.01)   *H01L 31/04* (2006.01)
*H01L 31/042* (2006.01)

(86) International application number:
**PCT/JP2011/050399**

(87) International publication number:
**WO 2011/089959 (28.07.2011 Gazette 2011/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2010 JP 2010236439**
**19.01.2010 JP 2010009432**

(71) Applicant: **Omron Corporation**
**Kyoto-shi, Kyoto 600-8530 (JP)**

(72) Inventor: **ITOH, Hideaki**
**Kyoto-shi**
**Kyoto 600-8530 (JP)**

(74) Representative: **Wilhelms · Kilian & Partner**
**Patentanwälte**
**Eduard-Schmid-Straße 2**
**81541 München (DE)**

(54) **MPPT CONTROLLER, SOLAR BATTERY CONTROL DEVICE, SOLAR POWER GENERATION SYSTEM, MPPT CONTROL PROGRAM, AND CONTROL METHOD FOR MPPT CONTROLLER**

(57) Even at an unknown power point, control by estimated maximum power point is carried out. An MPPT controller (20) includes: a measurement data acquiring section (31), which acquires an amount of solar radiation and/or a temperature from a pyrheliometer (14)/a thermometer (15), and which acquires an electric current value and/or a voltage value from an ammeter (17a)/a voltmeter (17b); a search control section (34), which searches for a maximum power point by controlling a power point of an array (10) by controlling an inverter (18); an estimate equation computing section (32), which estimates an estimate equation (A) that holds between the amount of solar radiation and a maximum operating current value and/or an estimate equation (B) that holds between the temperature and a maximum operating voltage value; and an MPP estimating section 35, which estimates a maximum power point at an amount of solar radiation or at a temperature by using the estimate equation (A) or (B).

FIG. 1

EP 2 527 949 A1

**Description**

Technical Field

The present invention relates to an MPPT controller, a solar battery control device, an MPPT control program, and a control method for MPPT controller in a solar power generation system including measuring instruments such as a pyrheliometer and a thermometer.

Background Art

For maximum electric power from a solar power generation system, it is important to efficiently find out the maximum power point (MPP) of a solar battery.

Generally, the output characteristics of a solar battery constituting a solar power generation system vary from hour to hour with the amount of solar radiation, the temperature, etc. For this reason, the solar power generation system is controlled by always monitoring the solar battery so that the solar battery operates at a power point at which the maximum output can be obtained. This control is called MPPT (maximum power point tracking) control.

For efficient MPPT control, a technique has conventionally been proposed which is intended to make a search more efficient by predefining the initial value for the search and the scope of the search according to the type of solar battery (Patent Literature 1).

However, MPPT control may, nevertheless, require time to find an optimum power point. In some cases, it takes several tens of minutes or longer to find an optimum power point. Frequently, the characteristics of a solar battery change under the influence of the amount of solar radiation and/or the temperature in the course of a search, with the result that no optimum power point can be found.

Accordingly, a procedure has conventionally been proposed for, while manipulating the operating voltage of an inverter, pre-registering, in a database, various parameters that are attained when the solar battery outputs electric power at the maximum power point and, during normal operation, adjusting the operating voltage in accordance with the parameters registered in the database (Patent Literature 2).

Citation List

Patent Literature 1
Japanese Patent Application Publication, Tokukaihei, No. 11-282553 (Publication Date: October 15, 1999)
Patent Literature 2
Japanese Patent Application Publication, Tokukai, No. 2000-181555 (Publication Date: June 30, 2000)

Summary of Invention

Technical Problem

However, in Patent Literature 2, control can only be performed at a power point based on a temperature and/or an amount of solar radiation that was actually measured and registered in the past, and in a case where an expected output cannot be obtained, a search for the maximum power point must be performed after all.

The present invention has been made in view of the foregoing problems, and it is an object of the present invention to provide a solar power generation system with an MPPT controller and the like for solar battery which can perform control by maximum power point even when no maximum power point measured in the past has been registered.

Solution to Problem

In order to solve the foregoing problems, an MPPT controller according to the present invention is an MPPT (maximum power point tracking) controller for controlling operation of a solar battery by searching for a maximum power point of the solar battery, including: measurement data acquiring means for acquiring environmental data and electric power data, the environmental data being measured values of an environment surrounding the solar battery, the electric power data representing information associated with electric power that is outputted from the solar battery; deriving means for deriving a relational expression that holds between the environmental data and electric power data at the maximum power point thus found; and estimating means for, by using the environmental data measured for the solar battery, estimating the maximum power point from the relational expression derived by the deriving means.

Further, in order to solve the foregoing problems, a control method according to the present invention for an MPPT controller is a control method for an MPPT controller for controlling operation of a solar battery by searching for a maximum power point of the solar battery, the MPPT control program causing a computer to execute a process including: a measurement data acquiring step of acquiring environmental data and electric power data, the environmental data being measured values of an environment surrounding the solar battery, the electric power data representing information associated with electric power that is outputted from the solar battery; an deriving step of deriving a relational expression that holds between the environmental data and electric power data at the maximum power point thus found; and an estimating step of, by using the environmental data measured for the solar battery, estimating the maximum power point from the relational expression derived in the deriving step.

In the foregoing configuration, the term "solar battery" encompasses any of the following: a cell, which is a solar power generation element; a cluster or a module of a plurality of cells connected in series; a string of modules connected in series; and an array of strings connected in parallel.

The phrase "searching for a maximum power point" means, by changing a load connected to the solar battery, detecting a power point at which the largest output is obtained. That is, the phrase "searching for a maximum power point" means a search by maximum power point tracking (MPPT), and such a search can be performed by using a commonly-used procedure for solving a search problem, such as hill-climbing search, annealing search, or genetic algorithm.

The "environmental data being measured values of an environment surrounding the solar battery" refers, for example, to a temperature and an amount of solar radiation around the solar battery. The "environment surrounding the solar battery" refers to a range of presence of an environmental factor that affects the performance of the solar battery. That is, in the case of a temperature, for example, the "environment surrounding the solar battery" means a range within which the temperature measured on the spot is considered to affect the performance of the solar battery.

Therefore, the measurement of the surrounding environment may be performed at a place at a distance from the solar battery. Moreover, the surrounding range may vary depending on the specific measured values.

Further, the environmental data includes time-series data indicating weather information, positions of surrounding obstacles, or the like, and temporal change therein.

The "electric power data representing information associated with electric power that is outputted from the solar battery" does not necessarily refer to an electric power value per se, but needs only include data from which the electric power value can be computed. An applicable example is electric power data indicating an electric current value or a voltage value. Alternatively, the electric current value may be calculable by deriving either the electric current value or the voltage value from the other according to the I-V characteristic of the solar battery.

The "relational expression that holds between the environmental data and electric power data at the maximum power point thus found" means a relational expression that holds, for example, "between the environmental data and a maximum operating current value at the maximum power point" or "between the environmental data and a maximum operating voltage value at the maximum power point"

The maximum operating current value means an electric current value that is measured at the maximum power point, and the maximum operating voltage value means a voltage value that is measured at the maximum power point.

Further, the relational expression is a relational expression that holds between one measured value and another, and examples are an equation of a relationship between linear shapes and a relational expression represented by a regression model.

For specific example, according to the foregoing configuration, either of the following relational expressions (A) and (B) is derived in the following manner.

(A) Relational Expression between the Amount of Solar Radiation and the Maximum Operating Current Value

An amount of solar radiation, which is environmental data, is acquired, and a maximum operation current value measured at a maximum power point found at the amount of solar radiation is acquired. Then, a relational expression that holds between the amount of solar radiation and the maximum operating current value is derived. This derivation can be obtained by measuring the amount of solar radiation once or more than once and measuring the maximum operation current value at the time of measurement of the amount of solar radiation.

(B) Relational Expression between the Temperature and the Maximum Operating Voltage Value

A temperature, which is environmental data, is acquired, and a maximum operation voltage value measured at a maximum power point found at the temperature is acquired. Then, a relational expression that holds between the temperature and the maximum operating voltage value is derived. This derivation can be obtained by measuring the temperature more than once and measuring the maximum operation voltage value at each time of measurement of the temperature.

Since the power point of the solar battery is determined by determining either the electric current value or the voltage value, the maximum power point can be estimated by computing the maximum operating current value or the maximum operating voltage value.

The maximum power point can be estimated by using either the relational expression (A) or (B) obtained by the derivation.

Since the maximum operating current value at an amount of solar radiation can be computed from the relational expression (A), the maximum power point at an amount of solar radiation can be estimated.

Further, since the maximum operating voltage value at a temperature can be computed from the relational expression (B), the maximum power point at a temperature can be estimated.

That is, it is possible to estimate the maximum power point from the relational expression by using the environmental data measured for the solar battery.

Therefore, even without performing a search for the maximum power point or registering a maximum power point measured in the past, the maximum power point can be estimated from the relational expression by measuring the environmental data.

This brings about such an effect that that the output efficiency of the solar battery can be improved by performing control by estimated maximum power point even at an unknown power point.

The MPPT controller may be realized by a computer. In this case, an MPPT control program for causing a computer to execute a step for realizing operation of each of the means and a computer-readable recording medium containing the program are encompassed in the scope of the present invention.

Advantageous Effects of Invention

As described above, an MPPT controller according to the present invention is configured to include: measurement data acquiring means for acquiring environmental data and electric power data, the environmental data being measured values of an environment surrounding a solar battery, the electric power data representing information associated with electric power that is outputted from the solar battery; deriving means for deriving a relational expression that holds between the environmental data and electric power data at the maximum power point thus found; and estimating means for, by using the environmental data measured for the solar battery, estimating the maximum power point from the relational expression derived by the deriving means.

Further, a control method according to the present invention for an MPPT controller is a method including: a measurement data acquiring step of acquiring environmental data and electric power data, the environmental data being measured values of an environment surrounding a solar battery, the electric power data representing information associated with electric power that is outputted from the solar battery; an deriving step of deriving a relational expression that holds between the environmental data and electric power data at the maximum power point thus found; and an estimating step of, by using the environmental data measured for the solar battery, estimating the maximum power point from the relational expression derived in the deriving step.

Further, an MPPT control program according to the present invention is a program for operating an MPPT controller and for causing a computer to execute the steps.

This brings about such an effect that that the output efficiency of the solar battery can be improved by performing control by estimated maximum power point even at an unknown power point.

Additional objects, features, and strengths of the present invention will be made clear by the description below. Further, the advantages of the present invention will be evident from the following explanation in reference to the drawings.

Brief Description of Drawings

Fig. 1

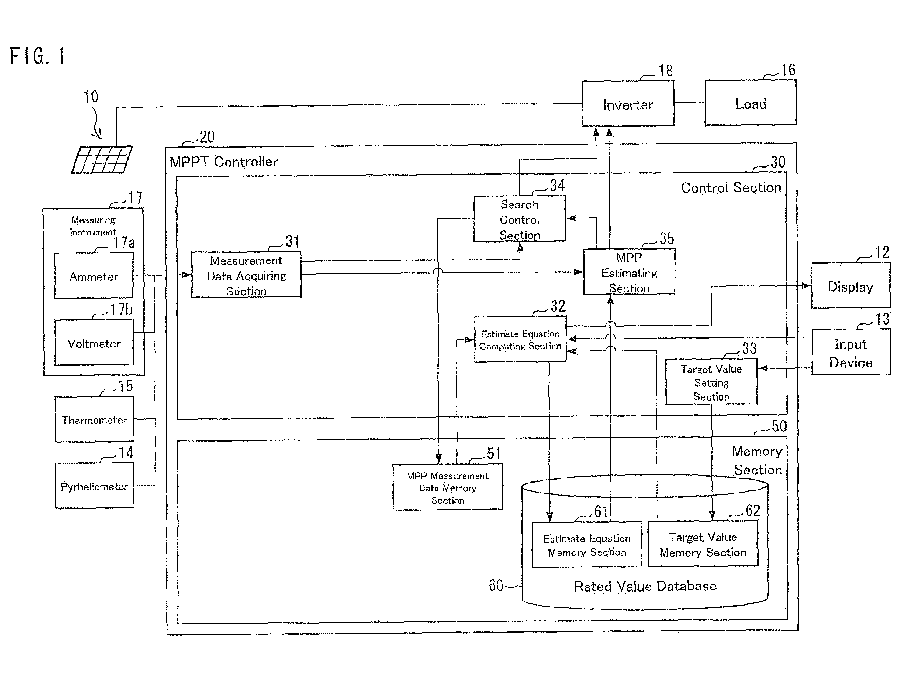

Fig. 1 is a functional block diagram schematically showing a configuration of an MPPT controller in a solar power generation system according to an embodiment of the present invention.
Fig. 2

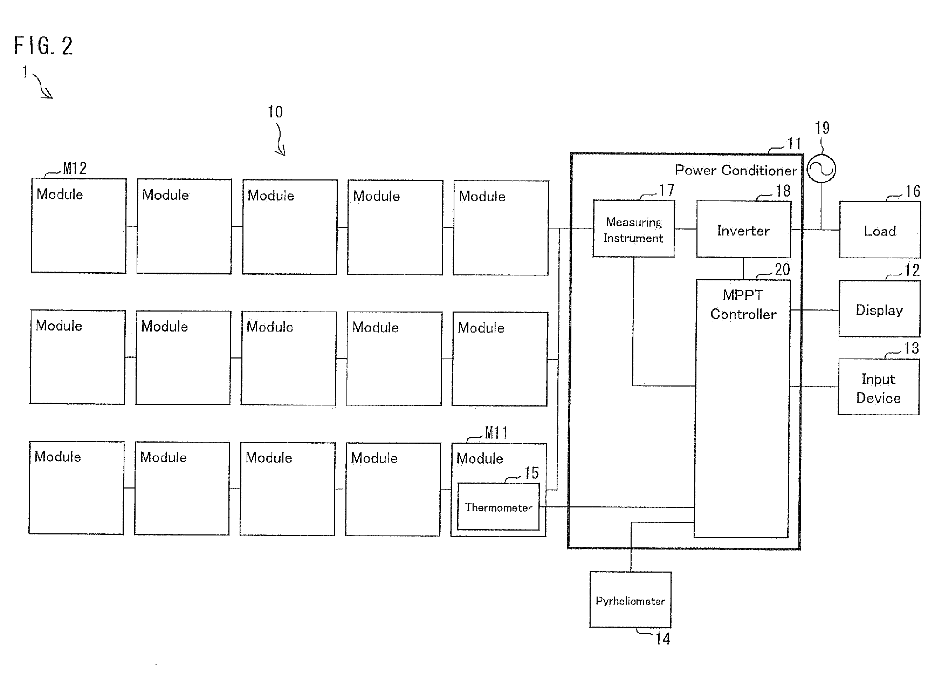

Fig. 2 is a functional block diagram schematically showing the solar power generation system.
Fig. 3

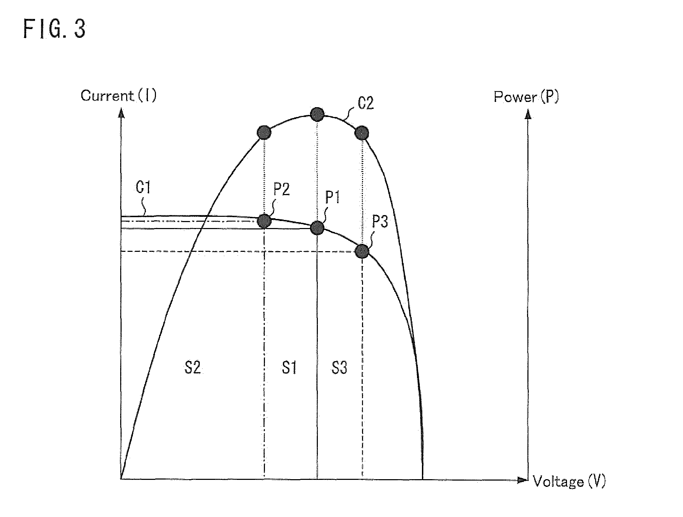

Fig. 3 is a graph showing the I-V and P-V characteristics of an array.
Fig. 4

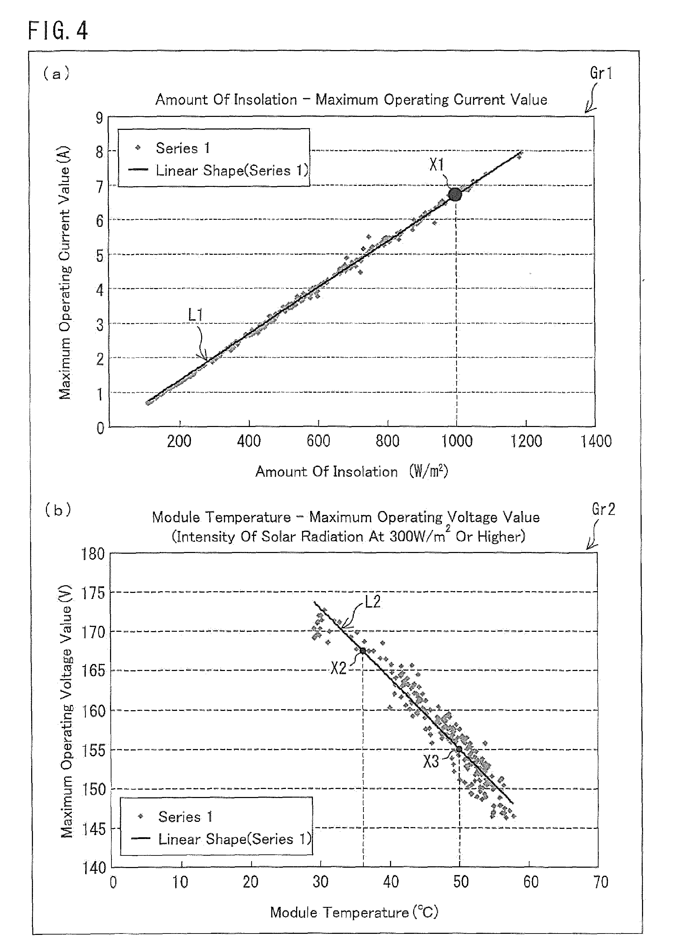

Fig. 4 is a graph showing a relationship of correspondence between the electric current value, the voltage value, the amount of solar radiation, and the temperature in the solar power generation system.
Fig. 5

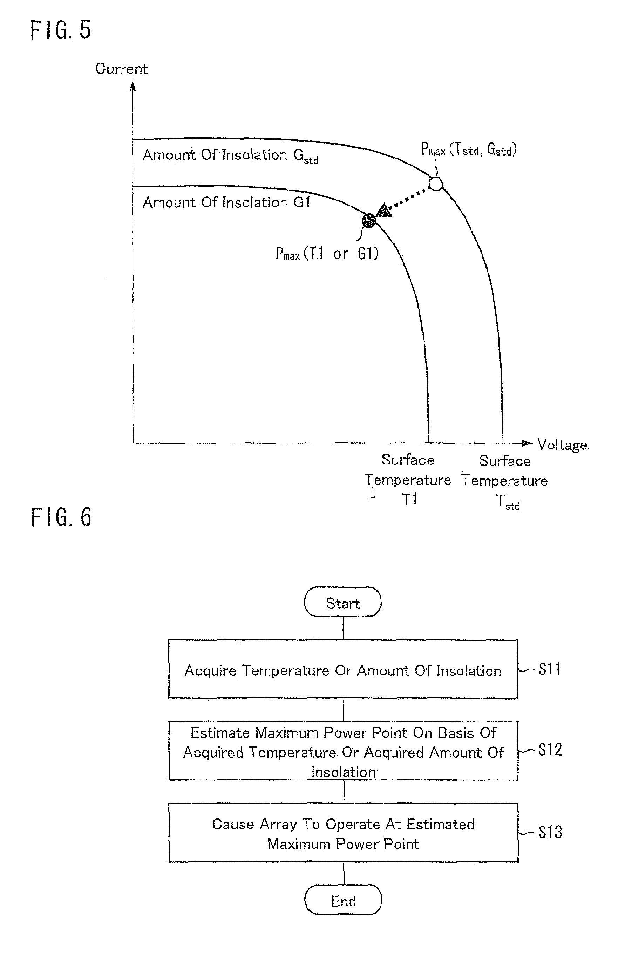

Fig. 5 is a graph showing an I-V characteristic serving as a standard for the array, an I-V characteristic under predetermined conditions, and the maximum power point of the array.
Fig. 6
Fig. 6 is a flow chart showing the flow of a process for causing the array to operate at an estimated maximum power point in the solar power generation system.
Fig. 7

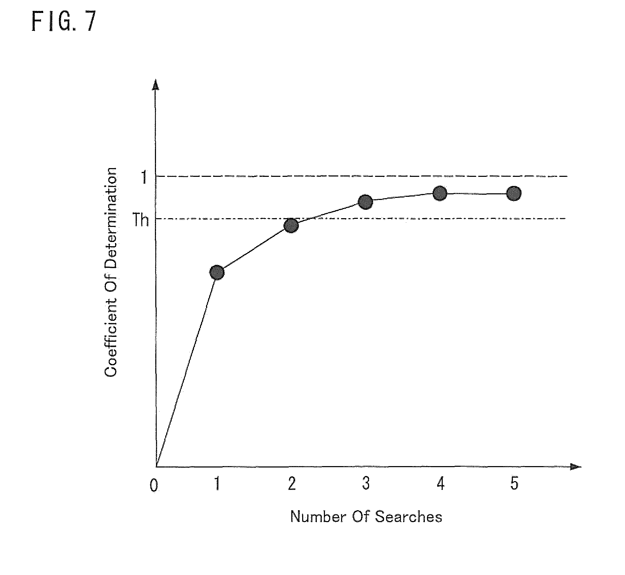

Fig. 7 is a graph showing a relationship between the coefficient of determination of an estimate equation and the number of searches.
Fig. 8

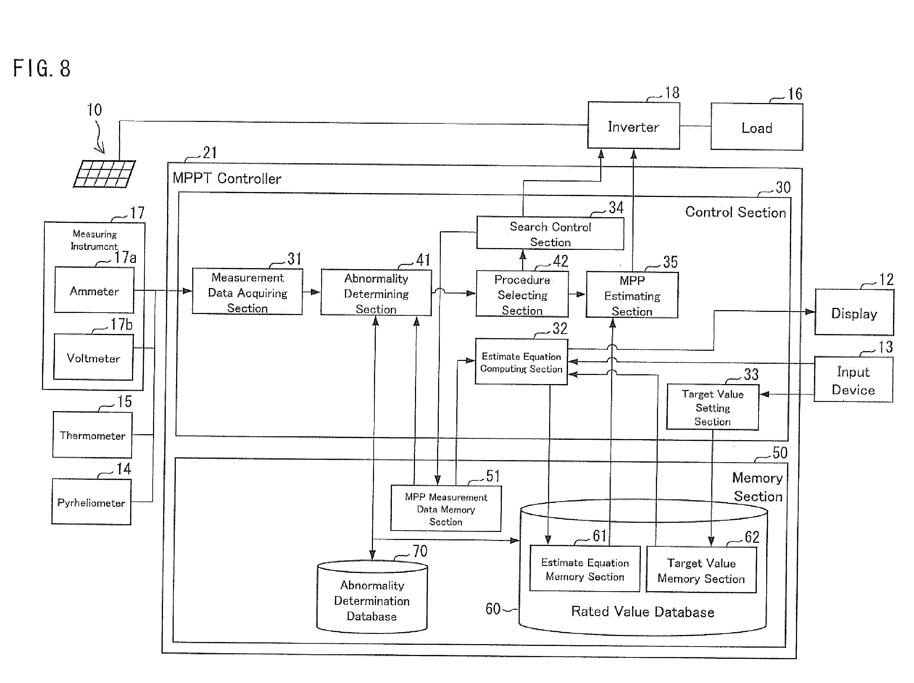

Fig. 8 is a functional block diagram schematically showing a configuration of an MPPT controller according to another embodiment of the present invention.
Fig. 9

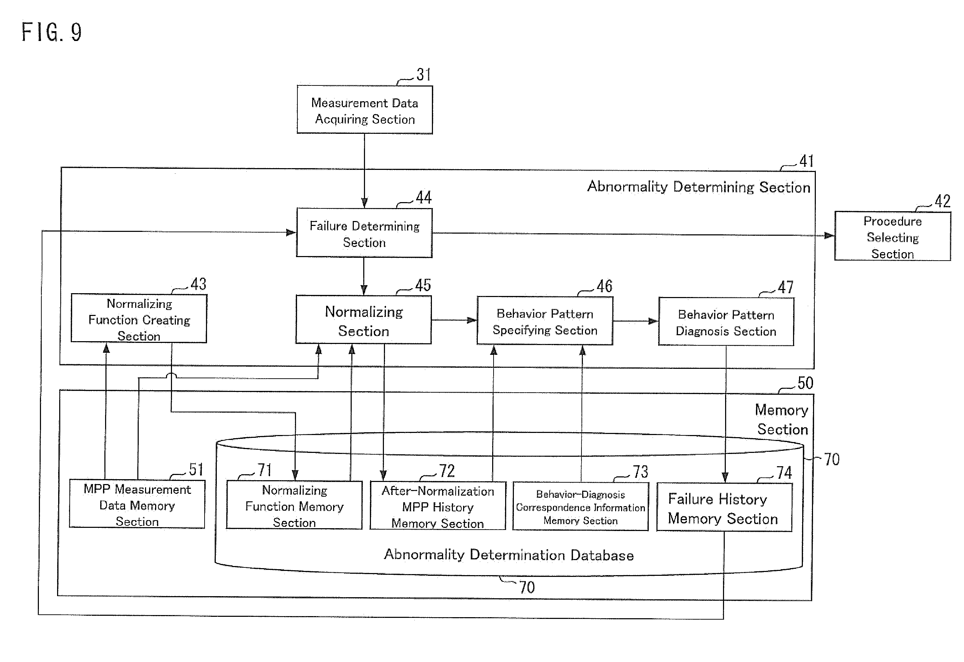

Fig. 9 is a functional block diagram schematically showing a configuration of an abnormality determining section and an abnormality determining database of the MPPT controller.
Fig. 10

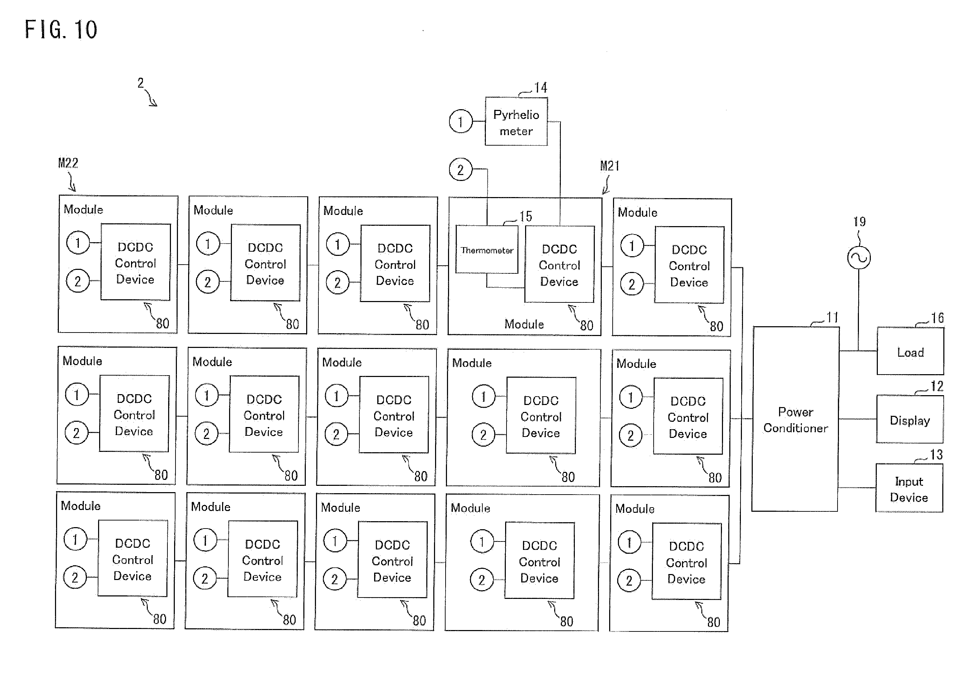

Fig. 10 is a functional block diagram schematically showing a configuration of a solar power generation system according to still another embodiment of the present invention.
Fig. 11

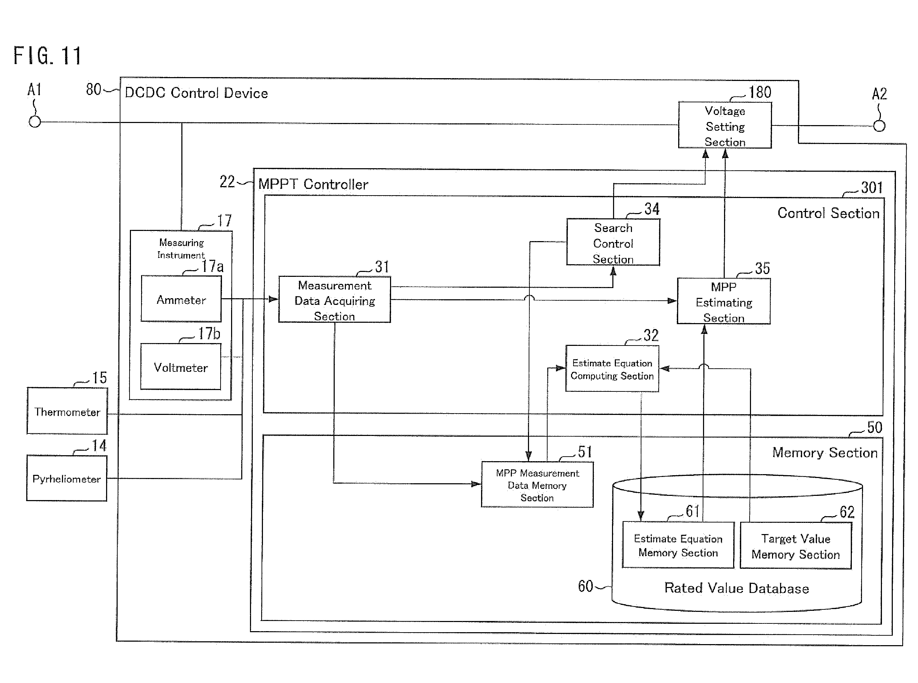

Fig. 11 is a functional block diagram schematically showing a configuration of a DCDC control device of the solar power generation system and an MPPT controller of the DCDC control device.
Fig. 12

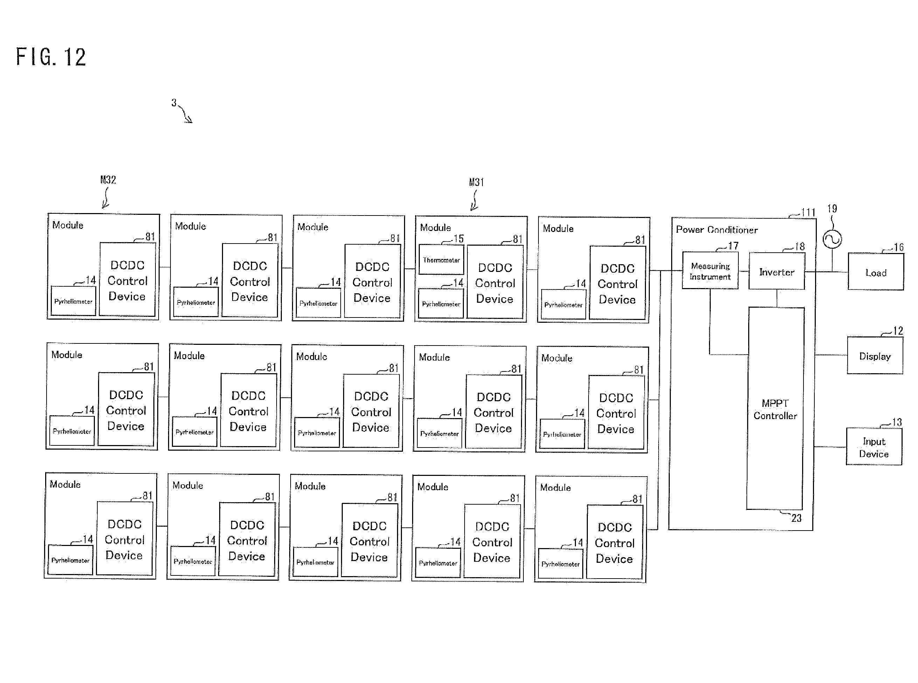

Fig. 12 is a functional block diagram schematically showing a configuration of a solar power generation system according to still another embodiment of the present invention.
Fig. 13

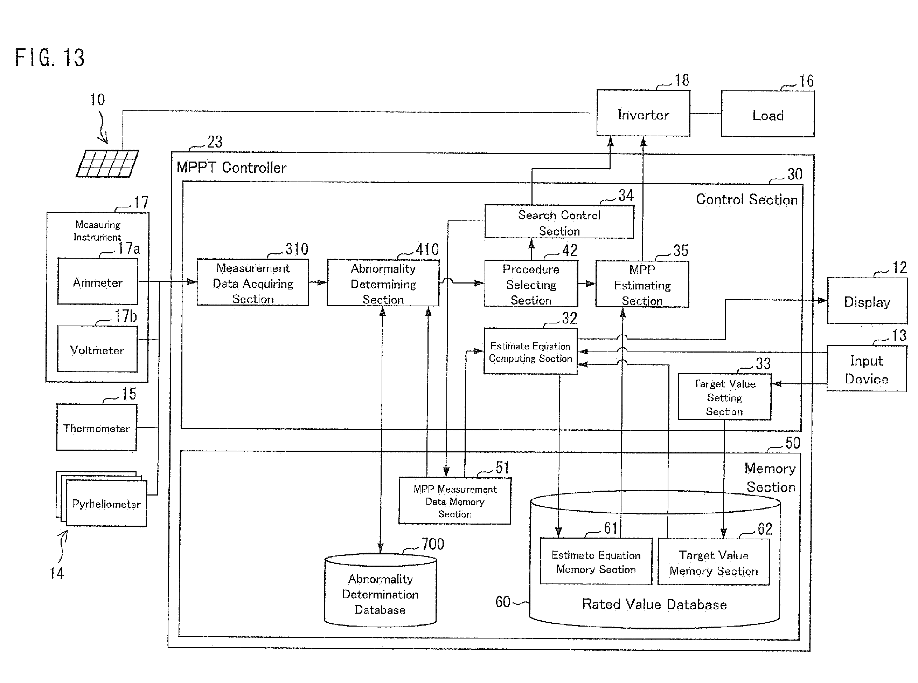

Fig. 13 is a functional block diagram schematically showing a configuration of an MPPT controller according to another embodiment of the present invention.
Fig. 14

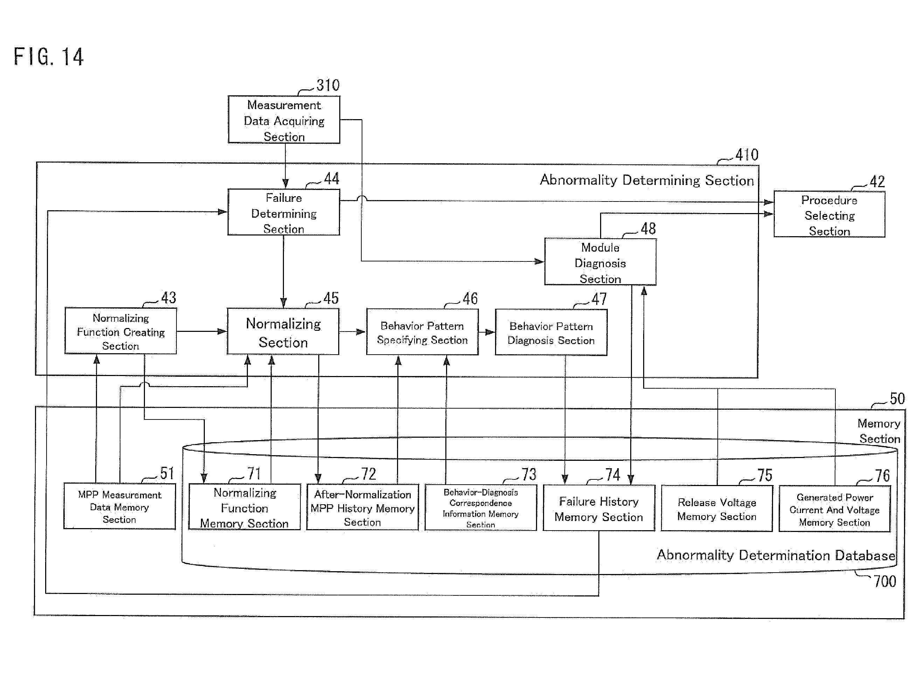

Fig. 14 is a functional block diagram schematically showing a configuration of an abnormality determining section and an abnormality determining database of the MPPT controller.
Fig. 15

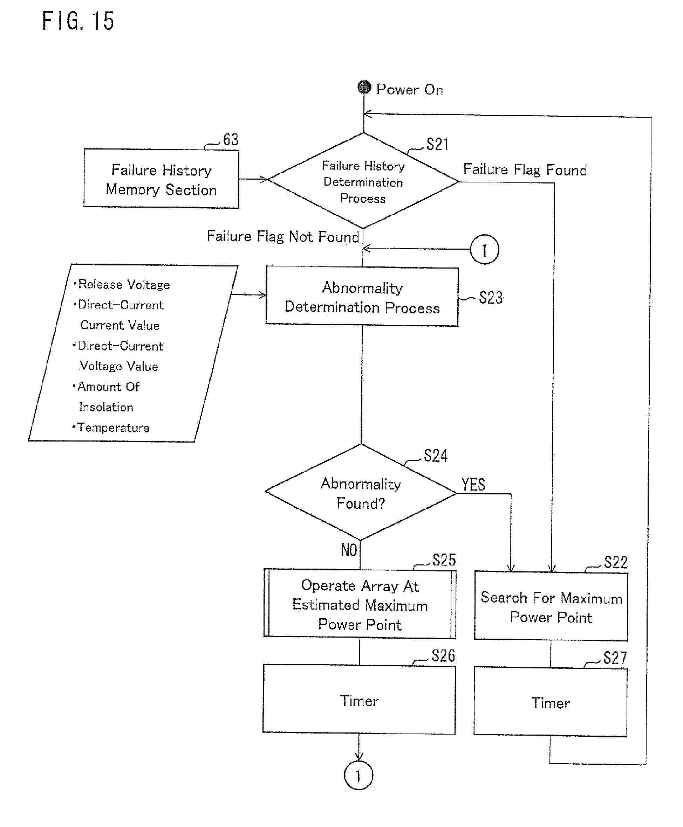

Fig. 15 is a flow chart showing the flow of a procedure selecting process in an MPPT controller.

Description of Embodiments

[Embodiment 1]

(Solar Power Generation System)

An embodiment of the present invention is described with reference to Figs. 1 through 7. As shown in Fig. 2, a solar power generation system 1 is configured to include a solar battery array (hereinafter abbreviated as "array") 10, a power conditioner (solar battery control device) 11, a display 12, an input device 13, a pyrheliometer (measuring section) 14, a thermometer (measuring section) 15, and a load 16.
The array 10 is an group of solar battery strings (hereinafter abbreviated as "strings") connected in parallel, and each of the strings is a group of solar battery modules (hereinafter abbreviated as "modules") M11 (M12) connected in series. Further, each of the modules M11 (M12) is a group of solar battery cells (hereinafter abbreviated as "cells"), i.e., solar power generation elements, connected in series. Alternatively, each of the modules M11 (M12) may be configured to include a plurality of clusters. The term "cluster" here means a group of cells connected in series and separated from each other by bypass diodes. That is, each of the clusters can be said to be a group of cells in each bypass diode.
Electric power generated in the array 10 is supplied to the power conditioner 11. It should be noted that the array 10 is not to be limited to the configuration shown in Fig. 2, but can be configured in various ways.
The power conditioner 11 serves to convert direct-current electric power outputted from the array 10 into desired electric power and supply it to the load 16. The power conditioner 11 includes a measuring instrument (measuring section) 17, an inverter 18, and an MPPT (maximum power point tracking) controller 20.
In addition to these components, the power conditioner 11 illustratively includes some or all of the following components: a system controller, a direct-current conditioner, a direct-current output interface, an inverter, an alternating-current output interface, a power system interface, etc.
The measuring instrument 17, inverter 18, and MPPT controller (power point controller) 20 of the power conditioner 11 are described below.

The measuring instrument 17 serves to measure the values of an electric current and a voltage that are supplied from the array 10 to the power conditioner 11, and is configured to include an ammeter 17a and a voltmeter 17b (see Fig. 1). The measuring instrument 17 sends measured values of an electric current and a voltage to the MPPT controller 20. Alternatively, the measuring instrument 17 may send measured physical quantities regularly or upon request of the MPPT controller 20. It should be noted that the measuring instrument 17 may be provided outside of the power conditioner 11.

The inverter 18 converts direct-current electric power generated in the array 10 into alternating-current electric power. Further, the inverter 18 functions to adjust the output voltage of the array 10, thereby making it possible to adjust a power point of output from the array 10. The "power point" here can be expressed as a position, on a graph whose vertical axis represents the electric current value and whose horizontal axis represents the voltage value, which has the electric current value and the voltage value as coordinate components. That is, the inverter 18 functions also as a power point setting section to set the output voltage value and output current value of the array 10.

The MPPT controller 20 serves to perform control so that direct-current electric power from the array 10 can be maximally and efficiently taken out, and will be described in detail later.

The display 12 serves to output various types of information for display. The display 12 is constituted by a display device such as an LCD (liquid crystal display element), a CRT (cathode-ray tube), or a plasma display. The input device 13 serves to receive instruction input, information input, etc. from a user, and is constituted, for example, by a key input device such as a keyboard or a button, a pointing device such as a mouse, etc. Upon receiving information input, the input device 13 sends it to the power conditioner 11. It should be noted the display 12 and the input device 13 may be configured as a touch panel interface that both performs a display and receives input.

It should be noted that the difference between the module M11 and the module M12 is whether or not a thermometer 15, which will be described later, is provided. In the solar power generation system 11, the module M11 and the module 12 used are identical in characteristic to each other.

The pyrheliometer 14 serves to measure the amount of solar radiation (also called "intensity of solar radiation"/ surrounding environment) of the array 10. The amount of solar radiation means the amount of radiant energy from the sun per unit time and unit area. The pyrheliometer 14 sends a measured amount of solar radiation to the power conditioner 11.

The thermometer 15 serves to measure the outside air temperature (surrounding environment) in an area around the array 10, and is installed in a place around the module M11 which is not exposed to direct sunlight. Further, the thermometer 15 sends a measured temperature to the power conditioner 11.

Thus, the solar power generation system 1 is configured such that the outside air temperature is measured by a single thermometer 15 in the whole array 10. Further, the solar power generation system 10 is illustratively configured such that the amount of solar radiation is measured by a single pyrheliometer 14 in the whole array 10.

It should be noted that as with the measuring instrument 17, the pyrheliometer 14 and the thermometer 15 may send measured physical quantities regularly or upon request of the power conditioner 11. Alternatively, the pyrheliometer 14 and the thermometer 15 may send measure points in time to the power conditioner 11 together with the measured physical quantities. The load 16 is a target of power supply, and is illustratively an electric device that is to be put in action by supplying electric power.

It should be noted that the solar power generation system 1 may be configured to be connected to a commercial power system 19 so as to be able to collaborate with it, or may be configured to independently operate without collaborating with the commercial power system 19.

(MPPT Controller)

Next, the MPPT controller 20 is described in detail with reference to Fig. 1. Fig. 1 is a functional block diagram schematically showing a configuration of the MPPT controller 20. As shown in Fig. 1, the MPPT controller 20 is configured to include a control section 30 and a memory section 50.

The control section 30 serves to overall control the operation of various components within the MPPT controller 20, and the memory section 50 serves to store information.

As shown in Fig. 1, the control section 30 is configured to include a measurement data acquiring section (measurement data acquiring means, amount-of-solar-radiation/temperature acquiring means, current/voltage acquiring means) 31, an estimate equation computing section (deriving means, estimation accuracy calculating means) 32, a target value setting section (target value setting means) 33, a search control section (maximum power point searching means, search starting means) 34, and an MPP estimating section (estimating means) 35.

Further, the memory section 50 is configured to include an MPP measurement data memory section 51 and a rated value database 60.

First, the configuration of the memory section 50 is described in detail.

The MPP measurement data memory section 51 serves to store, as MPP measurement data, measurement data obtained from each measuring instrument while the array 10 is operating at the maximum power point (MPP). Specifically, the MPP measurement data contains the following measured values measured at the maximum power point: "measure point in time", "maximum operating current value", "maximum operating voltage value", "amount of solar radiation", and "temperature".

The measure point in time is data representing year, month, day, hour, minute, and second. Further, the maximum operating current value and the maximum operating voltage value refer to values of an electric current and a voltage as measured at the maximum power point, respectively. Further, the amount of solar radiation and the temperature are an amount of solar radiation and a temperature measured by the pyrheliometer 14 and the thermometer 15, respectively. The rated value database 60 is provided with an estimate equation memory section 61 and a target value memory section 62.

The estimate equation memory section 61 serves to store an estimate equation (relational expression) for estimating the maximum operating current value and an estimate equation (relational expression) for estimating the maximum operating voltage value. The estimate equations that are stored in the estimate equation memory section 61 will be described in detail later.

The target value memory section 62 serves to store a target value of the estimation accuracy of an estimate equation computed by the estimate equation computing section 32, which will be described later.

In the following, the configuration of the control section 30 is described in detail.

The measurement data acquiring section 31 serves to acquire measured values from each measuring instrument. Specifically, the measurement data acquiring section 31 acquires measurement data (electric power data, environmental data), which is time-series data containing the electric current value, the voltage value, the amount of solar radiation, and the temperature, from the ammeter 17a and voltmeter 17b of the measuring instrument 17, the pyrheliometer 14, and the thermometer 15, and sends the measurement data to the search control section 34 and the MPP estimating section 35.

The estimate equation computing section 32 serves to compute an estimate equation by using the MPP measurement data read out from the MPP measurement data memory section 51. As will be described in detail later, the estimation accuracy of an estimate equation computed by the estimate equation computing section 32 is improved by repeatedly computing the estimate equation by using more MPPT measurement data. As an example, the estimate equation computing section 32 is configured to repeatedly compute an estimate equation until the estimation accuracy of the estimate equation reaches the target value of estimation accuracy stored in the target value memory section 62. The estimate equation computing section 32 stores, in the estimate equation memory section 61 of the rated value database 60, the estimate equation thus computed.

The target value setting section 33 serves to acquire a target value of the estimation accuracy of an estimate equation inputted by the user via the input device 13 and store the target value in the target value memory section 62 of the rated value database 60.

The search control section 34 serves to search for the maximum power point of the array 10 by controlling the inverter 18 in accordance with the measurement data sent from the measurement data acquiring section 31. The search control section 34 searches for the maximum power point, for example, by controlling the inverter 18 so that the output voltage value of the array 10 varies. The search for the maximum power point can be performed by using a commonly-used procedure for solving a search problem, such as hill-climbing search, annealing search, or genetic algorithm.

It should be noted that the control of the search control section 34 will be described in detail later. Further, the search control section 34 stores the time-series data of the maximum operating current value and maximum operating voltage value at the maximum power point, the amount of solar radiation, and the temperature as the MPP measurement data in the MPP measurement data memory section 51.

The MPP estimating section 35 serves to estimate the maximum power point by applying the measurement data acquired by the measurement data acquiring section 31 to an estimate equation read out from the estimate equation memory section 61.

The I-V characteristic of the array 10 depends on the amount of solar radiation and the temperature. Therefore, at a predetermined amount of solar radiation and a predetermined temperature, the maximum power point can be estimated simply by obtaining either the maximum operating current value or the maximum operating voltage value.

Accordingly, the MPP estimating section 35 estimates the maximum power point, specifically, either by computing the maximum operating current value from the estimate equation for estimating the maximum operating current value or by computing the maximum operating voltage value from the estimate equation for estimating the maximum operating voltage value.

Moreover, the MPP estimating section 35 instructs the inverter 18 so the output voltage value and output current value of the array 10 are at the estimated maximum power point thus estimated. A procedure by which the MPP estimating section 35 estimates the maximum operating current value and the maximum operating voltage value from the estimate equations is described in detail later.

(Control of the Search Control Section)

Next, a specific example (hill-climbing search) of the control of the search control section 34 is described with reference to Fig. 3.

A relationship between the current value and voltage value of the array 10 is represented by an I-V curve C1 shown in Fig. 3. It should be noted here that the power point corresponds to a position, on the I-V curve C1, which has the electric current value and the voltage value as coordinate components. The search control section 34 gradually changes the voltage value so that the power point varies among power points P1, P2, and P3. Then, a power point at which the voltage value is at its maximum is searched for by comparing electric power values measured at the respective power points (S1 to S3). The electric power values can be expressed by the areas of rectangles (S1 to S3) formed by the origin and the power points, respectively. In Fig. 3, the rectangles S1 to S3 are represented by a solid line, an alternate long and short dash line, and a broken line, respectively. This current-voltage relationship is represented by a P-V curve C2.

The search control section 34 controls the inverter 18 so that with the power point P2 as the initial value, for example, the power point varies from side to side on the I-V curve. In this case, greater electric power can be obtained when the power point is made to vary in a direction away from the origin. Moreover, the search control section 34 causes the voltage value to vary in a direction away from the origin, so that the power point shifts from the power point P2 through the power point P1 to the power point P3 at predetermined time intervals.

In Fig. 3, the area of S1 is largest among the areas S1, S2, and S3 at the respective power points P1, P2, and P3. In other words, the curve C2 takes a downward turn from an increase at the power point P1. This means that the power point P1 is the maximum power point.

When the P-V curve is convex upward, the maximum power point is a point at which the P-V curve takes a downward turn from a monotonic increase. In addition, in a case where there are depressions in the I-V curve due to an abnormality in the solar battery modules and the like, the power point obtained by the foregoing search is a local solution. Therefore, the power point obtained by the foregoing search is not always the maximum power point.

In such a case, the search for the maximum power point is usually performed by using a procedure such as "annealing search", "taboo search", or "genetic algorithm", instead of the "hill-climbing search".

Alternatively, a procedure for searching through all of the power points each time can be used. To the extent that all of the power points are searched through, the procedure is more inefficient than the above procedure, but makes it possible to surely avoid a local solution.

(Estimate Equations That the Estimate Equation Computing Section Computes and Stores in the Estimate Equation Memory Section)

Next, estimate equations that the estimate equation computing section 32 computes and stores in the estimate equation memory section 61 are described in detail with reference to Fig. 4.

(a) of Fig. 4 is a graph showing a relationship between the amount of solar radiation ($W/m^2$) and the maximum operating current value (A) as a function of the amount of solar radiation, and (b) of Fig. 4 is a graph showing a relationship between the module temperature (°C) and the maximum operating voltage value (V) as a function of the module temperature.

According to the procedure described below, the estimate equation computing section 32 computes at least either the estimate equation for estimating the maximum operating current value or the estimate equation for estimating the maximum operating voltage value.

[Estimate Equation for Estimating the Maximum Operating Current Value]

The following is the procedure by which the estimate equation computing section 32 computes the estimate equation for estimating the maximum operating current value.

First, the relationship between the amount of solar radiation ($W/m^2$) and the maximum operating current value (A) is described with reference to (a) of Fig. 4. Let it be assumed that Gstd ($W/m^2$) is the standard amount of solar radiation and Istd (A) is the standard maximum operating current value. In the graph Gr1, whose horizontal axis represents the amount of solar radiation ($W/m^2$) and whose vertical axis represents the maximum operating current value (A), the relationship between the amount of solar radiation ($W/m^2$) and the maximum operating current value (A) can be approximated by a straight line L1 passing through the origin and the power point X1 (Gstd, Istd).

As an example, let it be assumed that at the power point X1, Gstd = 1000 ($W/m^2$). If Istd is known here, the slope (hereinafter referred to as "IG") of the straight line L1 can be computed. For this reason, the estimated maximum operating current value Imax at the amount of solar radiation g can be obtained from the following estimate equation (A):

$$Imax = IG \times g \cdots (A).$$

Therefore, if the standard amount of solar radiation and the maximum operating current value at that amount of solar radiation are known, the maximum operating current value at a predetermined amount of solar radiation can be obtained from the estimate equation (A). That is, the estimate equation (A) indicates the proportional relationship between the amount of solar radiation and the maximum operating current value.

Furthermore, since the estimate equation (A) is an regression equation whose target variable is the maximum operating current value and whose explaining variable is the amount of solar radiation, the coefficient IG of the estimate equation (A) may be obtained by measuring the amount of solar radiation and the maximum operating current value at that amount of solar radiation more than once and conducting a regression analysis.

That is, in either of the following two ways, the estimate equation computing section 32 can compute the estimate equation for estimating the maximum operating current value as represented by the estimate equation (A).

First, as long as even one piece of MPP measurement data has been stored in the MPP measurement data memory section 51, i.e., as long as the maximum power point has been measured even once, the estimate equation computing section 32 can compute the estimate equation (A) from the amount of solar radiation and the maximum operating current value that are contained in the MPP measurement data. This makes it possible to quickly compute the estimate equation (A).

Second, if the maximum power point has been measured more than once through a search, the estimate equation computing section 32 can also compute the estimate equation (A) by conducting a regression analysis. That is, the estimate equation computing section 32 can compute the estimate equation (A) by reading the MPP measurement data stored in the MPP measurement data memory section 51 and conducting a regression analysis with use of the amount of solar radiation and the maximum operating current value that are contained in the MPP measurement data. This makes it possible to more accurately compute the estimate equation (A).

[Estimate Equation for Estimating the Maximum Operating Voltage Value]

The following is the procedure by which the estimate equation computing section 32 computes the estimate equation for estimating the maximum operating voltage value.

First, the relationship between the module temperature (°C) and the maximum operating voltage value (V) is described with reference to (b) of Fig. 4. There is such a tendency that the maximum operating voltage value becomes higher as the module temperature becomes lower and, in reverse, the maximum operating voltage value becomes higher as the module temperature becomes lower.

In the graph Gr2, whose horizontal axis represents the temperature and whose vertical axis represents the maximum operating voltage value, the straight line L2 representing the relationship between the module temperature and maximum operating voltage value is a right-downward straight line. Since this straight line L2 is a linear regression model whose target variable is the maximum operating voltage value V and whose explaining variable is the temperature T, their relationship can be approximately expressed by the following regression equation (1):

$$V = VT \times T + C \text{ (C is the coefficient of the regression equation)} \cdots (1).$$

Further, from the regression equation (1), the estimate equation (B) for obtaining the estimated maximum operating current value Vmax at the module temperature t can be computed as follows:

$$Vmax = VT \times t + C \cdots (B).$$

It should be noted here that VT is the slope of the straight line L2 and can be approximately obtained by measuring the module temperature and the maximum operating current value at that module temperature twice.

For example, if the temperature and maximum operating voltage value at the power point X2 and the temperature and maximum operating voltage value at the power point X3 are measured, the straight line L2 can be approximately obtained from these.

That is, the estimate equation (B) indicates the liner relationship between the temperature and the maximum operating voltage value.

Further, the estimation accuracy of the estimate equation (B) is improved by measuring the module temperature and the maximum operating voltage value at that module temperature more than once and obtaining VT and C through a regression analysis.

Furthermore, if the MPP measurement data for use in regression analysis is limited to that containing a predetermined or larger amount of solar radiation (e.g., 300 W/m$^2$), the applicability of the regression equation is dramatically improved.

That is, in either of the following two ways, the estimate equation computing section 32 can compute the estimate equation (B) for estimating the maximum operating current value.

First, if MPP measurement data at two different power points have been stored in the MPP measurement data memory section 51, the estimate equation computing section 32 can compute the estimate equation (B) from the temperatures and maximum operation voltage values contained in the MPP measurement data.

Second, if the module temperature and the maximum operation voltage value have been measured more than once through a search, the estimate equation computing section 32 can also compute the estimate equation (B) by conducting a regression analysis. That is, the estimate equation computing section 32 can compute the estimate equation (B) by reading the MPP measurement data stored in the MPP measurement data memory section 51 and conducting a regression analysis with use of the temperatures and maximum operation voltage values that are contained in the MPP measurement data. This makes it possible to more accurately compute the estimate equation (B).

(Estimation of the Maximum Power Point by the MPP Estimating Section)

The MPP estimating section 35 uses either of the following methods (i) and (ii) to estimate the maximum power point:

(i) Apply the amount of solar radiation measured by the pyrheliometer 14 to the estimate equation (A) to compute an estimated maximum operating voltage value, thereby obtaining an estimated maximum power point.
(ii) Apply the temperature measured by the thermometer 15 to the estimate equation (B) to compute an estimated maximum operating voltage value, thereby obtaining an estimated maximum power point.

In other words, the MPP estimating section 35 may be configured to use either of the following methods (i) and (ii) to estimate the maximum power point. That is, the solar power generation system 1 does not need to include both the pyrheliometer 14 and the thermometer 15, but needs only include either of them for use in the estimation (i) or (ii).

Alternatively, the MPP estimating section 35 may determine, in accordance with measured values measured by each measuring instrument or other parameters that can be measured in the solar power generation system 1, whether to use the method (i) or (ii) to estimate the maximum power point.

For example, the MPP estimating section 35 may be configured to select the method (i) if the amount of solar radiation measured is smaller than 300 W/m$^2$ and to select the method (ii) if the amount of solar radiation measured is equal to or larger than 300 W/m$^2$.

An explanation is given below in a different perspective with reference to an I-V curve shown in Fig. 5.

Fig. 5 shows a curve C3 representing the characteristic of a module in which the maximum power point Pmax (Tstd, Gstd) is obtained at the standard amount of solar radiation (Gstd) and the standard temperature (Tstd).

It should be noted here that in the case of a predetermined amount of solar radiation G1 or a predetermined temperature T1, the MPP estimating section 35 uses the estimate equation (A) or (B) to obtain an estimated operating current value or an estimated operating voltage value. In this way, the MPP estimating section can estimate the maximum power point Pmax (T1 or G1). That is, the MPP estimating section 35 can obtain the maximum power point directly from the estimate equation (A) or (B) without actually performing a search.

(Process for Causing the Array to Operate at an Estimated Maximum Power Point)

Next, a process, in the solar power generation system 1, for causing the array 10 to operating at an estimated maximum power point is described with reference to Fig. 6.

First, the measurement data acquiring section 31 acquires an amount of solar radiation and a temperature from the pyrheliometer 14 or the thermometer 15 (S11).

Next, the MPP estimating section 35 reads out the estimate equation (A) or (B) from the estimate equation memory section 61, applies the amount of solar radiation thus acquired or the temperature thus acquired to the estimate equation (A) or (B), and compute an estimated maximum operating current value or an estimated maximum operating voltage value, thereby estimating the maximum power point (S12).

Then, the inverter 18 causes the array 10 to operate at the estimated maximum power point as instructed by the MPP estimating section 35 (S13).

(Operation/working-effect)

As described above, an MPPT controller 20 according to the present invention is configured to include: a measurement data acquiring section 31, which acquires an amount of solar radiation and/or a temperature from a pyrheliometer14/a thermometer 15, and which acquires an electric current value and/or a voltage value from an ammeter 17a/a voltmeter 17b; a search control section 34, which searches for a maximum power point by controlling a power point of an array 10 by controlling an inverter 18; an estimate equation computing section 32, which derives an estimate equation (A) that holds between the amount of solar radiation and the maximum operating current value and/or an estimate equation (B) that holds between the temperature and the maximum operating voltage value; and an MPP estimating section 35, which estimates a maximum power point at an amount of solar radiation or at a temperature by using the estimate equation (A) or (B).

This makes it possible to use estimate equations (A) to (C) to estimate the maximum power point even without performing a search for the maximum power point or registering a maximum power point measured in the past. That is, such an effect is brought about that the output efficiency of the array 10 can be improved by performing control by estimated maximum power point even at an unknown power point.

(Modification)

In the following, a preferred modification of the solar power generation system 1 is described.

[Computation of an Estimate Equation by Multiple Linear Regression Analysis]

In the foregoing, the estimate equation computing section 32 has been described as computing, through a linear regression model whose explaining variable is the module temperature, the estimate equation (B) for estimating the maximum operating voltage. The estimate equation computing section 32 is not limited to this, and may compute, through a multiple linear regression analysis, an estimate equation for estimating the maximum operation voltage.

In this case, not only the module temperature but also the amount of solar radiation are used as explaining variables. Let it be assumed here that T is the module temperature, G is the amount of solar radiation, and VT and GV are the partial regression variables. Then, a regression equation expressing their relationship can be represented by the following equation (2):

$$V = VT \times T + GV \times G + C \text{ (C is the coefficient)} \cdots (2).$$

By deriving VT, GV, and C from this regression equation, an estimate equation (C) representing the maximum operating voltage Vmax at the module temperature t and the amount of solar radiation g can be obtained as follows:

$$Vmax = VT \times t + GV \times g + C \cdots (C).$$

[Timing of Measurement and Derivation]

It should be noted that the estimate equations (A) to (C) may be computed by performing measurements by each measuring instrument once or more than once at the time of introduction of the solar power generation system 1, or may be computed as a search for the maximum power point is performed after the introduction. Further, this search may be performed manually by the user's operating the input device 13, or may be performed automatically, e.g., regularly. In particular, the MPPT controller 20 can make the setting operation at the time of introduction more efficient, because the measurement of the maximum operation current value and the amount of solar radiation needs only be performed once and the measurement of the maximum operation voltage value and the temperature needs only be performed twice.

[Search Based on an Estimated Maximum Power Point]

The MPPT controller 20 may be configured to search for the actual maximum power point on the basis of an estimated maximum power point in the following manner: The MPPT estimating section 35 estimates the maximum power point and the search control section 34 performs a search for the maximum power point with the estimated maximum power point as a base point. Then, in accordance with the resulting maximum power point, the inverter 18 causes the array 10 to operate.

There is a possibility that the estimated maximum power point may deviate from the actual maximum power point. However, if the relational expression is accurate, the estimated maximum power point should not be much different from the actual maximum power point. Therefore, a search for the maximum power point with the estimated maximum power point as a base point makes it possible to quickly find the actual maximum power point.

According to the foregoing configuration, by using as a base point a maximum power point estimated by the MPPT estimating section 35, the search control section 34 performs a search for the maximum power point. This makes it possible to quickly cause the array 10 to operate at the maximum power point.

Alternatively, the MPPT controller 20 may perform measurements and derivations in such a cycle as follows: In the daytime, when the solar power generation system 1 generates electricity, the array 10 operates at a maximum power point found by using as a base point a maximum power point estimated by the MPPT estimating section 35 as mentioned above. Meanwhile, the search control section accumulates measurement data in the MPPT measurement data memory section 51.

Further, in the nighttime, when the solar power generation system 1 does not generate electricity, the estimate equation computing section 32 computes an estimate equation in accordance with the measurement data accumulated in the MPPT measurement data memory section 51 during the daytime and stores, in the estimate equation memory section 61, the estimate equation thus computed.

Then, on the next day, the MPPT estimating section 35 estimates the maximum power point in accordance with the newly-computed estimate equation, and the array 10 operates at a maximum power point found by using that maximum power point as a base point.

An update on the estimate equation in the estimate equation memory section 61 in such a daily cycle keeps the accuracy of the estimate equation high, thus allowing for more efficient power generation in the solar power generation system 1.

[Setting of a Target Value]

A procedure for setting a target value in computing the estimate equations (A) to (C) is described with reference to Fig. 7.

An increase in the number of searches brings an improvement in the applicability of the estimate equations (A) to (C) to MPP measurement data. Therefore, the accuracy of estimation of the maximum power point on the basis of an unknown amount of solar radiation or an unknown module temperature is improved. Meanwhile, there is a limit to improvement in estimation accuracy even with an increase in the number of searches.

The applicability of a regression equation can be quantitatively evaluated by a "coefficient of determination $R^2$ ($0 \geq R^2 \geq 1$)" calculated in the process of calculation of the regression equation. Therefore, the number of searches or a target value of estimation accuracy can be determined by using the coefficient of determination.

A specific explanation is given below with reference to Fig. 7. Fig. 7 shows a graph representing a relationship between the number of searches and the coefficient of determination. As shown in Fig. 7, as the number of searches increases, the coefficient of determination gets closer to 1. However, once the number of searches has reached 3, there is almost no further increase in the coefficient of determination.

Accordingly, in order to set a target value Th and automatically terminate the search at a point in time where a coefficient of determination equal to or larger than the target value Th has been obtained, the MPPT controller 20 can be configured in the following manner.

First, the input device 13 receives input of the target value Th from the user, and the target value setting section 33 acquires the target value Th via the input device 13 and stores the target value Th in the target value memory section 62.

Then, the search control section 34 detects the maximum power point by repeating searches by controlling the inverter 18, and stores MPP measurement data at the maximum power point in the MPP measurement data memory section 51. The estimate equation computing section 32 reads out the MPP measurement data stored in the MPP measurement data memory section 51, computes an estimate equation, and stores, in the estimate equation memory section 61, the estimate equation thus computed.

Since the estimate equation computing section 32 can compute the coefficient of determination $R^2$ in computing the estimate equation, the estimate equation computing section 32 compares the computed coefficient of determination $R^2$ to the target value Th stored in the target value memory section 62.

If the coefficient of determination $R^2$ is equal to or larger than the target value Th, the search is terminated. On the other hand, if the coefficient of determination $R^2$ is smaller than the target value Th, another search is performed.

Further, the display 12 may display the graph shown in Fig. 7, so that the user can easily grasp the estimation accuracy of an estimate equation. For example, the estimate equation computing section 32 may cause the display 12 to display the graph shown in Fig. 7 each time the estimate equation computing section 32 computes an estimate equation on the basis of a search performed by the search control section 34.

Furthermore, such a configuration is possible that the search is performed manually, i.e., by carrying out an operation in the input device 13, so that while confirming the graph shown in Fig. 7, the user can determine whether or not to perform a further search.

Such a configuration allows the user to visually recognize a learning effect (improvement in estimation accuracy of an estimate equation) brought about by repeating searches. This serves as a reference for determination of the number of searches. For example, in a case where the modules are installed in an adverse environment and the coefficient of determination $R^2$ rises excessively slowly, lowering the target value Th can be considered. This makes it possible to set a reasonable target value according to the installation location of the modules.

[Embodiment 2]

Another embodiment of the present invention is described below with reference to Figs. 8 and 9. In the present embodiment, a case is described where the MPPT controller 20 provided in the power conditioner 11 of the solar power generation system 1 determines an abnormality in the array 10.

First, an MPPT controller (power point controller) 21 according to the present embodiment is described with reference to Fig. 8. For convenience of explanation, those members which have the same functions as those already described with reference to the drawings are given the same reference signs, and as such, are not described below.

The MPPT controller 21 is configured by adding an abnormality determining section (abnormal state determining means) 41, a procedure selecting section (search procedure selecting means) 42, and an abnormality determination database 70 to the MPPT controller 20 shown in Fig. 1.

The abnormality determining section 41 serves determine whether the output from the array 10 is normal or abnormal by using measurement data from each measuring instrument and information stored in the abnormality determination database 70. The abnormality determining section 41 illustratively carries out abnormality determination by monitoring the behavior of the maximum power point of the array 10. Further, the abnormality determining section 41 determines whether an abnormal state is a temporary state attributed to the weather, a shadow, etc. or a permanent state attributed to a failure in the modules or the like.

Specific examples of such abnormality determination are as follows: In a case where a point of output, i.e., a coordinate position given by a voltage value and an electric current value, deviates from a standard characteristic, i.e., an output characteristic serving as a standard when the output from the array 10 is normal, the output from the array 10 can be determined to be abnormal. Furthermore, in a case where the point of output returns to the standard characteristic, it means that the output from the array 10 returns to normal, and such an abnormality can be determined to be temporary. Further, in a case where the point of output does not return to the standard characteristic, it means that the output from the array 10 does not return to normal, and such an abnormality can be determined to be permanent.

The procedure selecting section 42 selects, in accordance with a result of determination of an abnormality by the abnormality determining section 41, a procedure suited for causing the array 10 to operate at the maximum power point.

Specifically, in a case where a result of determination of an abnormality by the abnormality determining section 41 is "abnormal", "temporarily abnormal", or "permanently abnormal", the procedure selecting section 42 selects, as the procedure for causing the array 10 to operate, a procedure for causing the array 10 to operate by searching for the maximum power point. That is, the procedure selecting section 42 selects a procedure by which the search control section 34 controls the inverter 18.

Meanwhile, in a case where a result of determination of an abnormality by the abnormality determining section 41 is "normal", the procedure selecting section 42 selects, as the procedure for causing the array 10 to operate, a procedure for causing the array 10 to operate at an estimated maximum power point. That is, the procedure selecting section 42 selects a procedure by which the MPP estimating section 35 uses the estimate equation (A) or (B) to obtain an estimated maximum power point and the inverter 18 causes the array 10 to operate at the estimated maximum power point.

It should be noted that the procedure selecting section 42 may lower the standard of abnormality determination, and, in the case of "normal" or "temporarily abnormal", may select, as the procedure for causing the array 10 to operate, the procedure for causing the array to operate at an estimate maximum power point.

The abnormality determination databse70 serves to store information that the abnormality determining section 41 uses for abnormality determination.

(Details of the Abnormality Determining Section and the Abnormality Determination Database)

Next, the abnormality determining section 41 and the abnormality determination database 70 are described in detail with reference to Fig. 9.

More specifically, the abnormality determining section 41 includes a normalizing function creating section 43, a failure determining section (abnormal state determining means) 44, a normalizing section 45, a behavior pattern specifying section 46, and a behavior pattern diagnosis section 47. Further, the abnormality determination database 70 includes a normalizing function memory section 71, a post-normalization MPP history memory section 72, a behavior-diagnosis correspondence information memory section 73, and a failure history memory section 74.

First, the abnormality determination database 70 is described in detail.

The normalizing function memory section 71 serves to store a normalizing function for normalizing a first measured value dependent on a second measured value so that the first measured value is the one that is obtained in a case where the second measured value is a predetermined value. Specifically, the normalizing function memory section 71 stores an electric current normalizing function for normalizing the electric current value dependent on the amount of solar radiation so that the electric current value is the one that is obtained at a predetermined amount of solar radiation and a voltage normalizing function for normalizing the voltage value dependent on the temperature so that the voltage value is the one that is obtained at a predetermined temperature.

The post-normalization MPP history memory section 72 serves to store time-series data at the maximum power point, which has the normalized electric current value and the normalized voltage value as coordinate components, as obtained in a case where the output from the array 10 is at its maximum.

The behavior-diagnosis correspondence information memory section 73 serves to store behavior correspondence information representing correspondence between behavior information indicating the behavior of the post-normalization maximum power point (hereinafter referred to as "post-normalization MPP") along with a time-shift and diagnostic information on the output from the array 10.

Types of behavior information are as follows: "at rest", which indicates a case where the post-normalization MPP remains unmoving; "abnormal", which indicates a case where the post-normalization MPP is in a state of movement; "returned to former state after move", which indicates a case where the post-normalization MPP underwent a movement but has returned to its former state; and "come to rest after move", which indicates a case where the post-normalization MPP has come to rest at a position to which it moved.

Types of diagnostic information are as follows: "normal", which indicates a case where the behavior of the post-normalization MPP is normal; "abnormal", which indicates a case where the behavior of the post-normalization MPP is abnormal; "temporarily abnormal", which indicates the case of an abnormality that can be determined from the behavior of the post-normalization MPP to be a temporary abnormality due to a shade or the like; and "permanently abnormal", which indicates the case of a temporary abnormality that can be determined from the behavior of the post-normalization MPP to be a permanent abnormality due to a failure or the like.

In the behavior-diagnosis correspondence information memory section 73, as an example, "at rest" and "normal" correspond to each other. Further, "move" and "abnormal" correspond to each other. Furthermore, "returned to former state after move" and "temporarily abnormal" correspond to each other. Moreover, "come to rest after move" and "permanently abnormal" correspond to each other.

The failure history memory section 74 stores a failure flag (abnormal state information) indicating the occurrence of such a permanent abnormality that an expected maximum output cannot be obtained in the solar power generation system 1.

In the following, the abnormality determining section 41 is described in detail.

The normalizing function creating section 43 serves to create the normalizing function by using the measurement data read out from the MPP measurement data memory section 51. The normalizing function creating section 43 stores, in the normalizing function memory section 71, the normalizing function thus created.

With reference to Fig. 4 again, a procedure by which the normalizing function creating section 43 creates the normalizing function is described here.

As shown in (a) of Fig. 4, the normalizing function creating section 43 conducts a regression analysis of time-series data of the maximum operating current value and the amount of solar radiation as read out from the MPP measurement data memory section 51, thereby computing a regression equation (estimate equation) represented by the aforementioned equation (A). In the example illustrated, the estimate equation (A) is Imax = 0.0097 × g. By using this regression equation, the normalizing function creating section 43 converts the electric current value dependent on the amount of solar radiation into the maximum operating current value (normalized electric current value) at the standard amount of solar radiation (normalized amount of solar radiation). For example, the normalizing function creating section 43 creates an electric current normalizing function for converting into an electric current value at an amount of solar radiation of 1000 W/m$^2$. The electric current normalizing function is as follows: (Normalized electric current) = Electric current value $\times$ 1000/Amount of solar radiation.

Further, as shown in (b) of Fig. 4, the normalizing function creating section 43 conducts a regression analysis of time-series data of the voltage value (maximum operating voltage value) and the temperature (module temperature) as read out from the MPP measurement data memory section 51, thereby computing the aforementioned regression equation (1). Since the regression analysis cannot be accurately conducted when the amount of solar radiation is small, the time-series data used contains an amount of solar radiation that is larger than a predetermined value (in the example illustrated, 300 W/m$^2$). In the example illustrated, the regression equation (1) is as follows: Voltage value = -0.8977 $\times$ t + 199.87. By using this regression equation (1), the normalizing function creating section 43 creates a voltage normalizing function for converting the voltage value dependent on the temperature into a voltage value at a temperature of 25°C. That is, the voltage normalizing function is as follows: (Normalized voltage value) = -0.8977 $\times$ (25-Temperature) + Voltage value.

It should be noted that the coefficient of a regression equation of a normalizing function stored in the normalizing function memory section 71 can be substituted by the coefficient of an estimate equation stored in the estimate equation memory section 53.

The failure determining section 44 determines, by confirming the presence or absence of a failure flag with reference to the failure history memory section 74, whether there has occurred a permanent abnormality in the solar power generation system 1. If a failure flag is stored in the failure history memory section 74, the failure determining section 44 determines that there has occurred an abnormality in the solar power generation system 1.

The normalizing section 45 serves to, by using the electric current normalizing function and voltage normalizing function stored in the normalizing function memory section 71, normalize the maximum operating current value and maximum operating voltage value of the measurement data stored in the MPP measurement data memory section 51. The normalizing section 45 stores, in the post-normalization MPP history memory section 72, the time-series data of the normalized electric current value and the normalized voltage value.

Once the electric current value is normalized by the amount of solar radiation, a shift of the normalized output point becomes unrelated to the amount of solar radiation; therefore, the point of output in a case where the output from the array 10 is normal is fixed with respect to the amount of solar radiation. Therefore, the output can be diagnosed as abnormal if the MPP shifts in a direction different from a direction of increase or decrease in voltage value. Further, the standard characteristic is a characteristic independent of the amount of solar radiation. This makes the diagnosis much easier and more accurate.

Furthermore, once the voltage value is normalized by the temperature, a shift of the normalized output point becomes unrelated to the amount of solar radiation and the temperature; therefore, the point of output in a case where the output from the array 10 is normal is fixed. Therefore, the output can be diagnosed as abnormal if the MPP shifts. Further, the standard characteristic is a characteristic independent of the amount of solar radiation and the temperature. This makes the diagnosis much easier and more accurate.

As opposed to the normalization, the standard characteristic may be converted in accordance with the amount of solar radiation and the temperature acquired by the measurement data acquiring section 31. Alternatively, it is possible to convert the standard characteristic in advance in accordance with various amounts of solar radiation and temperatures, store correspondence between the amounts of solar radiation and the temperatures in the memory section 50, reads out, from the memory section 50, a standard characteristic corresponding to the amount of solar radiation and the temperature acquired by the measurement data acquiring section 31.

The behavior pattern specifying section 46 specifies the behavior pattern of an MPP whose components are the maximum operating current value and the maximum operating voltage value normalized by the normalizing section 45. Specifically, the behavior pattern specifying section specifies which type of behavior information stored in the behavior-diagnosis correspondence information memory section 73 the behavior pattern of the MPP corresponds to, and sends the behavior information thus specified to the behavior pattern diagnosis section 47.

The behavior pattern diagnosis section 47 diagnoses whether the maximum power point of the array 10 is normal or abnormal. More specifically, the behavior pattern diagnosis section 47 acquires, with reference to the behavior-diagnosis correspondence information memory section 73, diagnostic information corresponding to the behavior information send from the behavior pattern specifying section 46, and treats, as a result of determination of an abnormality in the array 10, the diagnostic information thus acquired.

Further, the behavior pattern diagnosis section 47 sends the result of abnormality determination to the procedure selecting section 42. Furthermore, the behavior pattern diagnosis section 47 stores a failure flag in the failure history memory section 74 in a case where the result of abnormality determination is "abnormal", "temporarily abnormal", or "permanently abnormal".

In a case where the result of abnormality determination is "normal" and there is a failure flag stored in the failure history memory section 74, the behavior pattern diagnosis section 47 may erase the failure flag from the failure history memory section 74, because it is considered that an abnormal state has been eliminated.

Determination of an abnormality by the behavior pattern diagnosis section 47 and confirmation of a failure flag by the failure determining section 44 are carried out regularly. For example, by using timers, the behavior pattern diagnosis section 47 and the failure determining section 44 can be configured to carry out abnormality determination and failure flag confirmation every hour, respectively.

Note, however, that this does not imply any limitation. In a case where the array 10 is in a "temporarily abnormal" state, the failure determining section 44 may change the intervals of abnormality determination. The intervals of abnormality determination may be lengthened or shortened.

For example, in a case where the "temporarily abnormal" state is the one caused by the influence of a shade, the influence of the shade may sometimes be eliminated by the sun's moving from one position to another. Accordingly, the intervals of abnormality determination can each be an appropriate period of time within which the influence of the shade is expected to be eliminated. This makes it possible to, as soon as a period of time within which the influence of the shade is thought to have been eliminated has elapsed, confirm whether or not the maximum power point of the array 10 is "normal".

Further, the failure determining section 44 may be configured to wait to carry out failure flag confirmation in a case where the array 10 is in a "temporarily abnormal" state. That is, the failure determining section 44 may carry out failure determination after waiting for the temporarily abnormal state to disappear spontaneously.

For example, the behavior pattern diagnosis section 47 needs only be configured to write a "waiting flag" in the failure history memory section 74 in a case where the array 10 is in a "temporarily abnormal" state, and the failure determining section 44 needs only be configured to extend a predetermined period of time and postpone failure determination in a case where there is a "waiting flag" written in the failure history memory section 74.

(Operation/working-effect)

According to the foregoing configuration, the behavior pattern diagnosis section 47 can determine whether or not the array is 10 in a "temporarily abnormal" state. This brings about an effect of making it possible to cause the array 10 to operate in accordance with whether the array 10 is "temporarily abnormal" or "permanently normal".

Further, since an "abnormal state" and the like can be determined by a "failure flag", determination of an abnormal state does not need to be carried out each time.

[Embodiment 3]

Still another embodiment of the present invention is described with reference to Figs. 10 and 11. First, a solar power generation system 2 according to the present embodiment is described with reference to Fig. 10. The solar power generation system 2 differs from the solar power generation system 1 in the following ways.

First, in the solar power generating system 2, each of the modules includes a DCDC control device (solar battery control device) 80 for controlling a DCDC (direct-current to direct-current) conversion.

Further, the module M21 is provided with a thermometer 15 so that the surface temperature of the module M21 can be measured, and the thermometer 15 is connected to the DCDC control section 80 of the module M21.

Each of the DCDC control devices 80 is connected to a pyrheliometer 14, and can acquire measurement data on the amount of solar radiation measured by the pyrheliometer 14. Further, the DCDC control device 80 of the module M22 is connected to the thermometer 15 provided in the module M21, and is configured to be able to acquire measurement data on the surface temperature of the module M21.

As for the other components, the solar power generation system 2 is identical to the solar power generation system 1. In particular, the solar power generation system 2 is identical to the solar power generation system 1 in that a single thermometer 15 is provided in the whole array 10 and that a single pyrheliometer 14 is provided in the whole array 10.

It should be noted that the foregoing configuration is merely the one taken as an example. For example, it is possible to arbitrarily choose which of the modules is provided with the thermometer 15.

(Configuration of the DCDC Control Device)

Next, a configuration of the DCDC control device 80 of the module M21 is described in detail as an example with reference to Fig. 11. As shown in Fig. 11, the DCDC control section 80 is configured to include a measuring instrument 17, a voltage setting section 180, and an MPPT controller (power point controller) 22.

The voltage setting section 180 serves to set the operating voltage value of the module M21 including the DCDC control device 80 and thereby adjust a power point. The voltage setting section 180 includes a terminal A1 and a terminal A2. The terminal A1 is connected to an end of cells connected in series in the module M21, and the terminal A2 is connected to another module.

The MPPT controller 22 is configured to include a control section 301 and a memory section 50.

The MPPT controller 22 differs from the MPPT controller 20, described with reference to Fig. 1, in the following ways. First, the MPPT controller 22 includes a control section 301 configured by omitting the target value setting section 33 from the control section 30. Further, in the MPPT controller 22, the search control section 34 and the MPP estimating section 35 serve to control and instruct the DCDC control device 80 setting the operating voltage value.

(Operation/working-effect)

The following are possible merits of the foregoing configuration. First, such a problem is commonly known that in the case of a shadow cast on a portion of a string of modules connected in series (e.g., in the case of leaves having fallen upon a module), the amount of power that is generated by the whole string is decreased to one severalth. With regard to this problem, in the solar power generation system 2, the DCDC control device 80 controls a DCDC (direct-current to direct-current) conversion for each separate module; therefore, the extent of the influence of a shadow can be confined only to the module on which the shadow has been cast.

Furthermore, it is possible that some of the modules in the array 10 connected to the power conditioner 80 might have been replaced due to failure or maintenance. For this reason, there might be a case where the modules contained in the array 10 do not have exactly the same characteristics with one another. Therefore, in such a case, it is anticipated that some modules decrease in accuracy of estimation of an estimate equation. With regard to this problem, the foregoing configuration stores an estimate equation for each separate module; therefore, the maximum power point can be estimated by an estimate equation suited to the characteristics of that module.

Further, it is unknown what type of array the power conditioner 80 of the solar power generation system 1 is connected to. Therefore, when connected to a totally unknown array, the power conditioner must compute new estimate equations to be stored in the estimate equation memory section 61. With regard to this problem, since the foregoing configuration has the MPPT controller 22 incorporated into a predetermined module, an estimate equation corresponding to that module can be prepared in advance. That is, by repeating searches in advance for the module into which the MPPT controller 22 is incorporated, an estimate equation can be computed and stored in the estimate equation memory section 61. This makes it possible to save the trouble of computing an estimate equation.

It should be noted that the MPPT controller 22 can be configured such that a target value stored in the target value memory section 62 can be altered from an outside source.

[Embodiment 4]

Still another embodiment of the present invention is described with reference to Figs. 12 and 15. First, a solar power generation system 3 according to the present embodiment is described with reference to Fig. 12. The solar power generation system 3 differs from the solar power generation system 1 in the following ways.

First, in the solar power generation system 3, each of the modules is provided with a pyrheliometer 14 and a DCDC control device 81. The DCDC control device 81 is configured to be able to send the release voltage, electric current value, and voltage value of its corresponding module M31 (M32) to a power conditioner (solar battery control device) 111.

Further, the thermometer 15 is provided in the module M31 and, furthermore, connected to the DCDC control device 81 provided in the module M31.

Moreover, each of the DCDC control devices 81 of the modules M32 is connected to the thermometer 15 provided in the module M31.

Further, the power conditioner 111 is provided with an MPPT controller (power point controller) 23 instead of the MPPT controller 20.

(Details of the MPPT Controller)

Next, the MPPT controller 23 is described in detail with reference to Fig. 13. As shown in Fig. 13, the MPPT controller 23 is provided with a measurement data acquiring section (amount-of-solar-radiation/temperature acquiring means, current/voltage acquiring means, release voltage value acquiring means) 310 instead of the measurement data acquiring section 31 of the MPPT controller 20 and an abnormality determining section (abnormal state determining means) 410 instead of the abnormality determining section 41. Further, the MPPT controller 23 is provided with an abnormality determination database 700 instead of the abnormality determination database 70.

The measurement data acquiring section 310 acquires the electric current value, voltage value, and temperature of the array 10 from the ammeter 17a and voltmeter 17b of the measuring instrument 17 and the thermometer 15. Moreover, the measurement data acquiring section 310 acquires the release voltage value, electric current value, and voltage value of each of the modules from the DCDC control device 81 provided in that module. Furthermore, the measurement data acquiring section 310 acquires amounts of solar radiation form the pyrheliometers provided in the respective modules. The measurement data acquiring section 310 sends measurement data containing the electric current value, voltage value, and temperature of the array 10, the release voltage value, electric current value, voltage value, and the amounts of solar radiation of each of the modules to the abnormality determining section 410.

(Details of the Abnormality Determining Section)

Next, the abnormality determining section 410 is described in detail with reference to Fig. 14. As shown in Fig. 14, the abnormality determining section 410 is configured by further adding a module diagnosis section (abnormal state determining means, release voltage determining means) 48 to the abnormality determining section 41. Further, the abnormality determination database 700 is configured by further adding a release voltage memory section 75 and a generated power current and voltage memory section 76 to the abnormality determination database 70.

The module diagnosis section 48 serves to diagnose, in accordance with the measurement data acquired from each of the modules, whether that module is normal or abnormal. The module diagnosis section 48 carries out abnormal diagnosis of each of the modules illustratively in either the following two ways.

First, the module diagnosis section 48 carries out abnormal diagnosis of each of the modules by reading out a normal range of release voltage values from the release voltage memory section 75 and determining whether the release voltage value of that module falls within the range. If the release voltage value of that module does not fall within the range, the module diagnosis section 48 determines that that module is abnormal.

For example, in a case where the release voltage value of a module configured to include clusters is abnormal, there is a possibility that a failure so called "cluster failure" might have occurred in that module. The module diagnosis section 48 can detect such a failure as a "cluster failure".

Second, the module diagnosis section 48 carries out abnormal diagnosis of each of the modules by reading out a normal range of generated power current values and a normal range of generated power voltage values from the generated power current and voltage memory section 76 and determining whether the generated power current and voltage values of that module fall within the respective ranges. If the generated power current and voltage values of that module do not fall within the respective ranges, the module diagnosis section 48 determines that that module is abnormal.

The release voltage value and the generated power current and voltage values can be measured comparatively quickly and easily. Therefore, an abnormality in the solar battery module can be detected quickly and easily, and a place of abnormality can be specified in detail.

In the case of a result of diagnosis "abnormal", the module diagnosis section 48 stores a failure flag in the failure history memory section 47. In so doing, the module diagnosis section 48 may store a failure flag about the whole array 10 or may store a failure flag about the module diagnosed as abnormal. Further, the module diagnosis section 48 sends the result of diagnosis as a result of abnormality determination to the procedure selecting section 42.

The release voltage memory section 75 serves to store correspondence between each of the modules and a normal range of release voltage values of that module.

The generated power current and voltage memory section 76 serves to store correspondence between each of the modules and normal ranges of generated power current and voltage values of that module.

(Flow of a Procedure Selecting Process)

Next, the flow of a procedure selecting process is described with reference to Fig. 15.

First, as soon as the process is started by turning on power in the power conditioner 11, the failure determining section 44 checks for a failure flag in the failure history memory section 74 (S21).

It should be noted here that in a case where there is a failure flag in the failure history memory section 74 ("FAILURE FLAG FOUND" in S21), the procedure selecting section 42 selects a procedure for causing the array 10 to operate by searching for the maximum power point (S22). Then, after waiting for a predetermined period of time (S27), the process returns to S21.

Meanwhile, in a case where there is no failure flag in the failure history memory section 74 ("FAILURE FLAG NOT FOUND" in S21), the module diagnosis section 48 determines whether the release voltage value of each of the modules falls within a normal range and whether the generated power current and voltage values of each of the modules fall within normal ranges (S23).

Then, if, as a result of the determination, any one of the release voltage value, generated power current value, and generated power voltage value of the module takes on an abnormal value, the module diagnosis section 48 diagnoses the module as being in an abnormal state (YES in S24). In this case, the procedure selecting section 42 selects a procedure for causing the array 10 to operate by searching for the maximum power point (S22).

On the other hand, if, as a result of the determination, all of the release voltage value, generated power current value, and generated power voltage value of the module take on normal values, the module diagnosis section 48 diagnoses the module as being in an normal state (NO in S24). In this case, the procedure selecting section 42 selects a procedure for causing the array 10 to operate at an estimated maximum power point described with reference to Fig. 6 (S25). Then, after a predetermined period of time (S26), the process returns to S23.

(Operation/working-effect)

Since each of the modules is configured to include a DCDC control device 81, the direct-current current value and direct-current voltage value of each of the modules can be measured. Therefore, it can be determined for each module whether the release voltage value, the generated power current value, and the generated power voltage value are abnormal or normal. This makes it possible to determine an abnormality in detail for each separate module.

(Modification)

In the following, a preferred modification of the solar power generation system 3 is described.

[Application to a DCDC Control Device]

The abnormality determining process can be applied in a DCDC control device 80 of the solar power generation system 2. That is, the MPPT controller 22 can be configured to include an abnormality determining section 410 and an abnormality determination database 700.

[Measurement of Relative Amounts of Solar Radiation]

The pyrheliometers 14 provided in the respective modules may be configured such that only one of the pyrheliometers 14 measures an absolute amount of solar radiation and the other pyrheliometers 14 detect relative differences with respect to the absolute amount of solar radiation. Therefore, for example, the other pyrheliometers 14 can be substituted by some of the modules.

[Storage of (an) Abnormal Value(s)]

After, as a result of the module diagnosis section 48 having diagnosed a module as being in an abnormal state because at least either the generated power current value or the generated power voltage value falls within an abnormal range, the search control section 34 has executed the maximum power point searching process, the generated power current value and/or the generated power voltage value, which take(s) on (an) abnormal value(s), may be stored in the memory section 50 in correspondence with the electric current value and the voltage value at the maximum power point thus found.

Moreover, next time a generated power current value and/or a generated power voltage value have/has been measured as (an) abnormal value(s) similar to those/that measured above, the maximum power point searching process may be executed with the corresponding maximum power point as the initial value.

This configuration brings about an effect of making it possible to shorten the amount of time required to search for the maximum power point.

[Learning Using (an) Abnormal Value(s)]

In a case where the generated power current value and/or the generated power voltage value, which take(s) on (an) abnormal value(s), are/is stored in the memory section 50 in correspondence with the electric current value and/or the voltage value at the maximum power point thus found, a set of these data may be modeled as a group of network structures and conditional probability tables of the Bayesian network as learning data, e.g., as a teacher-assisted learning technique.

According to this configuration, an appropriate initial value or a range of appropriate initial values can be determined for an electric current value or a voltage value that falls within an unknown abnormal range.

This as a result brings about an effect of making it possible to shorten the search time and reduce the possibility of falling into a local solution.

In the modeling, environmental measurement data such as weather information or positions of surrounding obstacles and temporal change in the environmental measurement data may be incorporated as in-model parameters in addition to the learning data. This makes it possible to build a more accurate learning model.

A widely known example of a technique for incorporating the temporal change in the environmental measurement data as time-series information into the Bayesian network is DBN (Dynamic Belief Network). Other possible examples are: (1) use of derivative values and integral values of electric current values and voltage values; (2) use of distribution size, skewness, and leptokurticity; and (3) use of a frequency component of the time-series data.

[Determination of Release Voltage Values]

Each module has a substantially unique release voltage value. It is therefore conceivable that the release voltage value published as a specification by the manufacturer of the module may be stored in the release voltage memory section 75. Further, in a case where the measured release voltage value is equal to or less than a predetermined release voltage value stated as one of the specifications of a module, e.g., equal to or less than 50%, the module diagnosis section 48 may diagnose that module as suffering from an abnormality.

[Determination of (an) Abnormal Range(s)]

The normal range of release voltage values of each module, which is stored in the release voltage memory section 75, and the normal ranges of generated power current values and voltage values, which are stored in the generated power current and voltage memory section 76, may be determined in the following manner.

First, with the module in a normal state, the release voltage value and the generated power current and voltage values are measured for a certain period of time, and the values thus measured are stored in the memory section 50.

Then, assuming that IQR = Third quartile of (release voltage value, generated power current value, and generated power voltage value) - First quartile, the following range of N is a normal range and the other ranges are abnormal range.

$$\mathrm{Minimum\ value\ -\ (1.5 \times IQR)\ \leq\ N\ \leq\ Maximum\ value\ +\ (1.5 \times IQR).}$$

[Adjustment of a Power Point]

The inverter 18 may adjust a power point by setting the operating current value and/or the operation voltage value for each module in accordance with control and instructions from the search control section 34 and the MPP estimating section 35. For example, the inverter 18 may instruct each DCDC control device 81 to operate at an estimated power point. This makes it possible to cause each module to operate by an optimum technique. Alternatively, the inverter may control a power point for each separate string. This makes it possible to change, for each separate string, techniques for adjusting the maximum power point.

Further, the estimate equation computing section 32 may compute an estimate equation for each separate module or for each separate string. This configuration has the following strengths.

That is, for long-term operation of the solar power generation system 3, it is conceivable that part or all of the existing system may be replaced or reused. Further, this may cause variations in power generation characteristic among the modules and the strings within the same system and thus reduce power generation efficiency. The foregoing configuration makes it possible to control operation at an estimated maximum power point for each separate module or string by an optimum technique. Therefore, even if part or all of the existing system is replaced or reused, a reduction in power generation efficiency can be prevented, so that high power generation efficiency can be maintained.

(Supplementary Matters)

The present invention is not limited to the description of the embodiments above, but may be altered by a skilled person within the scope of the claims. An embodiment based on a proper combination of technical means disclosed in different embodiments is encompassed in the technical scope of the present invention.

The blocks or, in particular, the control section 30 of each of the MPPT controllers 20 to 24 may be achieved through hardware logic or through software by using a CPU as described below.

That is, each of the MPPT controllers 20 to 24 includes: a CPU (central processing unit), which executes instructions from a program for achieving the corresponding function; a ROM (read only memory), in which the program is stored; an RAM (random access memory), to which the program is loaded; a memory device (recording medium), such as a memory, in which the program and various types of data are stored; and the like. Moreover, the object of the present invention can be attained by mounting, to each of the MPPT controllers 20 to 24, a recording medium computer-readably containing a program code (an execute form program, intermediate code program, or source program) of software for achieving the aforementioned function, in order for the computer (CPU or MPU) to retrieve and execute the program code recorded in the recording medium.

Examples of the recording medium encompass: tapes, such as magnetic tapes and cassette tapes; disks including magnetic disks, such as floppy disks (registered trademark) and hard disks, and optical disks, such as CD-ROMs, MOs, MDs, BDs, DVDs, and CD-Rs; cards, such as IC cards (including memory cards) and optical cards; and semiconductor memories, such as mask ROMs, EPROMs, EEPROMs, and flash ROMs.

Further, each of the MPPT controllers 20 to 24 can be made connectable to a communication network, so that the program code can be supplied via the communication network. Examples of the communication network include, but are not particularly limited to, the Internet, an intranet, an extranet, a LAN, ISDN, a VAN, a CATV communication network, a virtual private network, a telephone line network, a mobile communication network, a satellite communication network, etc. Further, a transmission medium constituting the communication network is not particularly limited. For example, it is possible to use, as the transmission medium, a cable system such as IEEE 1394, a USB, a power line, a cable TV line, a telephone line, an ADSL line, etc. Alternatively, it is possible to use, as the transmission medium, a wireless system such as infrared rays as in IrDA and a remote controller, Bluetooth (registered trademark), 802.11 wireless, HDR, a cellular-phone network, a satellite line, a terrestrial digital network, etc. It should be noted that the present invention can be achieved in the form of a computer data signal realized by electronic transmission of the program code and embedded in a carrier wave.

Finally, the present invention can be expressed as follows: A power point controller according to the present invention is a power point controller for controlling a power point of a solar battery, the power point controller being configured to include: amount-of-solar-radiation/temperature acquiring means for acquiring an amount of solar radiation and/or a temperature; current/voltage acquiring means for acquiring an electric current value and/or a voltage value; maximum power point searching means for searching for a maximum power point; deriving means for deriving a relational expression that holds between the amount of solar radiation and a maximum operating current value at the maximum power point and/or a relational expression that holds between the temperature and a maximum operating voltage value at the maximum power point; and estimating means for estimating a maximum power point at an amount of solar radiation or at a temperature by using the relational expression(s) derived by the deriving means.

Further, a control method according to the present invention for a power point controller is a control method for a power point controller for controlling a power point of a solar battery, the method including: an amount-of-solar-radiation/temperature acquiring step of acquiring an amount of solar radiation and/or a temperature; a current/voltage acquiring step of acquiring an electric current value and/or a voltage value; a maximum power point searching step of searching for a maximum power point; an deriving step of deriving a relational expression that holds between the amount of solar radiation and a maximum operating current value at the maximum power point and/or a relational expression that holds between the temperature and a maximum operating voltage value at the maximum power point; and an estimating step of estimating a maximum power point at an amount of solar radiation or at a temperature by using the relational expression(s) derived by the deriving means.

Further, the power point controller according to the present invention is preferably configured such that the deriving means derives the relational expression(s) on the basis of a proportional relationship between the amount of solar radiation and the maximum operating current value by using a set of a single value of the amount of solar radiation and the maximum operating current value and/or on the basis of a linear relationship between the temperature and the maximum operating voltage value by using a set of two values of the temperature and the maximum operating voltage value.

According to the foregoing configuration, the measurement of the amount of solar radiation and the search for the maximum power point need only be each performed once for the derivation of the relational expression that holds between the amount of solar radiation and the maximum operating current value. Alternatively, the measurement of the temperature and the search for the maximum power point need only be each performed twice for the derivation of the relational expression that holds between the temperature and the maximum operating voltage value. It should be noted that the two sets differ in temperature from each other. It is desirable that the two temperatures for use in the derivation be different from each other to some extent.

Applicable examples are as follows: temperatures measured in the morning and in the middle of the day, respectively; temperatures measured at the same time on two consecutive days, respectively; and temperatures measured at the same time on two days in different seasons, such as summer and winter, respectively.

Another applicable example is temperatures close to the upper and lower limits, respectively, of the temperature range to which the module is resistant.

This brings about an effect of making it possible to quickly derive the relational expression between the amount of solar radiation and the maximum operating current value and/or the relational expression between the temperature and the maximum operating voltage value.

In particular, there is such an advantage that a change in the characteristics of the solar power generation system due to replacement or repair of part or all of the solar battery can be quickly dealt with.

Further, the power point controller according to the present invention is preferably configured such that the deriving means derives, by using a set of plural values of the amount of solar radiation and the maximum operating current value for a linear regression model whose target variable is the maximum operating current value and whose explaining variable is the amount of solar radiation, the relational expression that holds between the amount of solar radiation and the maximum operating current value and/or derives, by using a set of plural values of the temperature and the maximum operating voltage value for a linear regression model whose target variable is the maximum operating voltage value and whose explaining variable is the temperature, the relational expression that holds between the temperature and the maximum operating voltage value.

The foregoing configuration makes it possible to derive (A) the relational expression between the amount of solar radiation and the maximum operating current value and/or (B) the relational expression between the temperature and the maximum operating voltage value by using the linear regression models, thereby bringing about an effect of allowing for derivation with higher accuracy by performing measurements a larger number of times.

In order to solve the foregoing problems, a power point controller according to the present invention is a power point controller for controlling a power point of a solar battery, including: amount-of-solar-radiation/temperature acquiring means for acquiring an amount of solar radiation and/or a temperature; current/voltage acquiring means for acquiring an electric current value and/or a voltage value; maximum power point searching means for searching for a maximum power point; deriving means for deriving a relational expression that holds between (i) the amount of solar radiation and the temperature and (ii) a maximum operating voltage value at the maximum point; and estimating means for estimating a maximum power point at an amount of solar radiation or at temperature by using the relational expression derived by the deriving means.

In the foregoing, a description has been given of a configuration for estimating a maximum power point on the basis of (A) the relational expression between the amount of solar radiation and the maximum operating current value or (B) the relational expression between the temperature and the maximum operating voltage value. However, as in the case of the foregoing configuration, a maximum power point can also be estimated on the basis of (C) the relational expression between (i) the amount of solar radiation and the temperature and (ii) the maximum operating voltage value.

That is, according to the foregoing configuration, an amount of solar radiation and a temperature are acquired, and a maximum operating voltage value measured at a maximum power point found at the amount of solar radiation and the temperature is acquired. Further, a relational expression that holds between (i) the amount of solar radiation and the temperature and (ii) the maximum operating voltage value is derived.

Therefore, since the maximum operating voltage value at an amount of solar radiation and at a temperature can be computed from the relational expression (C), the maximum power point at an amount of solar radiation and at a temperature can be estimated.

In addition, the maximum operating voltage value can be better calculated in view of the effect of the amount of solar radiation on the voltage value at the maximum power point by estimating the maximum power point on the basis of (C) the relational expression between (i) the amount of solar radiation and the temperature and (ii) the maximum operating voltage value than by estimating the maximum power point on the basis of (B) the relational expression between the temperature and the maximum operating voltage value.

The power point controller according to the present invention is preferably configured to further include estimation accuracy calculating means for calculating the accuracy of an estimation made by using the relational expression derived by the deriving means.

The foregoing configuration makes it possible to calculate the accuracy of estimation of the relational expression derived.

For example, in a linear regression model, the accuracy of estimation, i.e., the applicability of a regression equation, can be expressed by a coefficient of determination. Further, the accuracy of estimation by a multiple regression model can be expressed by a coefficient of determination adjusted for the degrees of freedom.

It should be noted that the accuracy of estimation may be presented in any manner. For example, the accuracy of estimation may be presented to the user by connecting display means such as a display to the power point controller, computing the accuracy of estimation at a point in time, and outputting the accuracy of estimation to the display means. Alternatively, the accuracy of estimation may be presented to the user for each time series by calculating the accuracy of estimation each time the relational expression is derived and accumulating the computed values.

Computation of the accuracy of estimation of a coefficient of determination by the foregoing configuration brings about an effect of making it possible to grasp the extent of accuracy of the relational expression and obtain an index for determining how many more times the derivation needs to be repeated.

The power point controller according to the present invention is preferably configured to further include target value setting means for setting a target value of the accuracy of an estimation made by using the relational expression derived by the deriving means, wherein the deriving means makes a derivation until the accuracy of estimation reaches the target value of estimation.

The foregoing configuration makes it possible to calculate the accuracy of estimation of the relational expression derived and make a derivation until the accuracy of estimation reaches the target value set.

As mentioned above, for example, in a regression mode, the accuracy of estimation can be expressed by a coefficient of determination or the like. Therefore, it is possible to employ a configuration in which a target value of the coefficient of determination is defined in advance and the derivation is terminated when the target value is exceeded.

This as a result brings about an effect of achieving a desired degree of estimation accuracy by measuring the temperature and the amount of solar radiation an appropriate number of times.

As described above, an MPPT controller according to the present invention is an MPPT (maximum power point tracking) controller for controlling operation of a solar battery by searching for a maximum power point of the solar battery, the MPPT controller being configured to include: measurement data acquiring means for acquiring environmental data and electric power data, the environmental data being measured values of an environment surrounding a solar battery, the electric power data representing information associated with electric power that is outputted from the solar battery; deriving means for deriving a relational expression that holds between the environmental data and electric power data at the maximum power point thus found; and estimating means for, by using the environmental data measured for the solar battery, estimating the maximum power point from the relational expression derived by the deriving means.

That is, the MPPT controller according to the present invention is preferably configured to further include a memory section in which to store the relational expression derived by the deriving means, wherein by using the environmental data newly acquired and the electric power data newly acquired, the deriving means updates the relational expression stored in the memory section.

According to the foregoing configuration, a relational expression derived in the past can be updated by newly acquiring environmental data and electric power data.

It should be noted that this update may be based solely on the environmental data newly acquired and the electric power data newly acquired, or may be based on a combination of the environmental data newly acquired, the electric power data newly acquired the environmental data acquired in the past, and the electric power data acquired in the past.

The relational expression can be derived more accurately by updating the relational expression on the basis of a larger amount of data.

That is, the MPPT controller according to the present invention is preferably configured to further include a search starting means for starting a search for the maximum power point by using as a base point the maximum power point estimated by the estimating means from the relational expression thus derived.

According to the foregoing configuration, even in a case where the estimated maximum power point is off the actual maximum power point, the power point of the solar battery can be quickly shifted to the actual maximum power point.

That is, the MPPT controller according to the present invention is preferably configured to further include: abnormal state determining means for determining whether or not the solar battery is in an abnormal state; and search procedure selecting means for selecting, in accordance with a result of determination of the abnormal state determining means, a procedure for setting the maximum power point.

The output characteristics of a solar battery in an abnormal state are different from the output characteristics of a normal solar battery. Therefore, in such a case, it is anticipated that the relational expression thus derived does not apply well.

According to the foregoing configuration, the procedure for setting the maximum power point is selected in accordance with a result of determination as to whether or not the solar battery is in an abnormal state.

For this reason, for example, in the case of an abnormal state, i.e., in a case where it is anticipated that the relational expression thus derived does not apply well, the maximum power point can be set by searching for it. Alternatively, in the case of a normal state, i.e., in a case where it is expected that the relational expression thus derived applies well, the maximum power point can be set by estimating it by using the relational expression thus derived.

This as a result brings about an effect of making it possible to select an appropriate procedure for setting the maximum power point.

That is, the MPPT controller according to the present invention is preferably configured to further include: release voltage value acquiring means for acquiring a release voltage value of the solar battery; and release voltage value determining means for determining whether or not the release voltage value falls within a normal range, wherein in a case where the release voltage value determining means determines that the release voltage value does not fall within the normal range, the abnormal state determining means determines that the solar battery is in an abnormal state.

According to the foregoing configuration, it can be determined from the release voltage value of the solar battery whether or not the solar battery is in an abnormal state. Further, the release voltage value of the solar battery can be measured in a comparatively short time.

In particular, in a case where the release voltage value of a solar battery module configured to include cluster is abnormal, there is a possibility that a failure so called "cluster failure" might have occurred. Even such a failed state can be detected.

The foregoing configuration brings about an effect of making it possible to quickly detect an abnormality in the solar battery. Further, detection of a "cluster failure" makes it possible to specify a place of abnormality in detail.

That is, a solar battery control device according to the present invention preferably includes: such an MPPT controller; and a voltage setting section which sets a voltage with respect to an electric current outputted from a solar battery and which produces an output to an outside at the voltage, the MPPT controller controlling the voltage setting section.

Specifically, the present invention can be suitably achieved as a solar battery control device in which the control point controller controls a voltage setting device. The foregoing configuration makes it possible to control an estimated maximum power point, for example, for each separate solar battery module, thus bringing about an effect of making it possible to cause each individual solar battery module to efficiently operate even at an unknown power point and, by extension, making it possible to improve the output efficiency of the solar power generation system.

Further, according to the foregoing configuration, the output efficiency of a solar battery array connected to a power conditioner can be improved, for example, for each separate solar battery array. This makes it possible to efficiently supply electric power to a load connected to the power conditioner.

Further, the present invention may be configured as a solar battery control device including a measuring section which measures measured values of an environment surrounding the solar battery and electric power that is outputted from the solar battery. Further, the present invention may be configured as a solar power generation system including: such a solar battery control device; and a solar battery which is connected to the solar battery control device. These configurations, too, bring about the same effects as those described above.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

Industrial Applicability

The present invention can be widely suitably applied to solar power generation systems of all sizes, large and small.

Reference Signs List

1 to 3 Solar power generation system
11, 111 Power conditioner (solar battery control device)
14 Pyrheliometer (measuring section)
15 Thermometer (measuring section)
17 Measuring instrument (measuring section)
17a Ammeter
17b Voltmeter
18 Inverter
20 to 23 MPPT controller (power point controller)
30, 301 Control section
31, 310 Measurement data acquiring section (measurement data acquiring means, amount-of-solar-radiation/temperature acquiring means, current/voltage acquiring means, release voltage value acquiring means)
32 Estimate equation computing section (deriving means, estimation accuracy calculating means)
33 Target value setting section (target value setting means)
34 Search control section (maximum power point searching means, search starting means)
35 MPP estimating section (estimating means)
41, 410 Abnormality determining section (abnormal state determining means)
42 Procedure selecting section (search procedure selecting means)
43 Normalizing function creating section
44 Failure determining section (abnormal state determining means)
45 Normalizing section
48 Module diagnosis section (abnormal state determining means, release voltage determining means)

50 Memory section
51 MPP measurement data memory section
53 Estimate equation memory section
60 Rated value database
61 Estimate equation memory section
62 Target value memory section
70, 700 Abnormality determination database
71 Normalizing function memory section
75 Release voltage memory section
80 DCDC control device (solar battery control device)
180 Voltage setting section

**Claims**

1. An MPPT (maximum power point tracking) controller for controlling operation of a solar battery by searching for a maximum power point of the solar battery, comprising:

   measurement data acquiring means for acquiring environmental data and electric power data, the environmental data being measured values of an environment surrounding the solar battery, the electric power data representing information associated with electric power that is outputted from the solar battery;
   deriving means for deriving a relational expression that holds between the environmental data and electric power data at the maximum power point thus found; and
   estimating means for, by using the environmental data measured for the solar battery, estimating the maximum power point from the relational expression derived by the deriving means.

2. The MPPT controller as set forth in claim 1, further comprising a memory section in which to store the relational expression derived by the deriving means, wherein
   by using the environmental data newly acquired and the electric power data newly acquired, the deriving means updates the relational expression stored in the memory section.

3. The MPPT controller as set forth in claim 1, further comprising a search starting means for starting a search for the maximum power point by using as a base point the maximum power point estimated by the estimating means from the relational expression thus derived.

4. The MPPT controller as set forth in claim 1, further comprising:

   abnormal state determining means for determining whether or not the solar battery is in an abnormal state; and
   search procedure selecting means for selecting, in accordance with a result of determination of the abnormal state determining means, a procedure for setting the maximum power point.

5. The MPPT controller as set forth in claim 4, further comprising:

   release voltage value acquiring means for acquiring a release voltage value of the solar battery; and
   release voltage value determining means for determining whether or not the release voltage value falls within a normal range, wherein
   in a case where the release voltage value determining means determines that the release voltage value does not fall within the normal range, the abnormal state determining means determines that the solar battery is in an abnormal state.

6. A solar battery control device comprising:

   an MPPT controller as set forth in claim 1; and
   a voltage setting section which sets a voltage with respect to an electric current outputted from a solar battery and which produces an output to an outside at the voltage,
   the MPPT controller controlling the voltage setting section.

7. The solar battery control device as set forth in claim 6, further comprising a measuring section which measures measured values of an environment surrounding the solar battery and electric power that is outputted from the solar battery.

8. A solar power generation system comprising:

a solar battery control device as set forth in claim 7; and
a solar battery which is connected to the solar battery control device.

9. An MPPT control program for operating an MPPT controller for controlling operation of a solar battery by searching for a maximum power point of the solar battery, the MPPT control program causing a computer to execute a process comprising:

a measurement data acquiring step of acquiring environmental data and electric power data, the environmental data being measured values of an environment surrounding the solar battery, the electric power data representing information associated with electric power that is outputted from the solar battery;
an deriving step of deriving a relational expression that holds between the environmental data and electric power data at the maximum power point thus found; and
an estimating step of, by using the environmental data measured for the solar battery, estimating the maximum power point from the relational expression derived in the deriving step.

10. A control method for an MPPT controller for controlling operation of a solar battery by searching for a maximum power point of the solar battery, the MPPT control program causing a computer to execute a process comprising:

a measurement data acquiring step of acquiring environmental data and electric power data, the environmental data being measured values of an environment surrounding the solar battery, the electric power data representing information associated with electric power that is outputted from the solar battery;
an deriving step of deriving a relational expression that holds between the environmental data and electric power data at the maximum power point thus found; and
an estimating step of, by using the environmental data measured for the solar battery, estimating the maximum power point from the relational expression derived in the deriving step.

FIG. 1

FIG. 2

EP 2 527 949 A1

FIG. 3

29

# FIG. 4

(a)
Gr1

**Amount Of Insolation – Maximum Operating Current Value**

X1, L1

Maximum Operating Current Value (A) / Amount Of Insolation (W/m²)

(b)
Gr2

**Module Temperature – Maximum Operating Voltage Value**
**(Intensity Of Solar Radiation At 300W/m² Or Higher)**

L2, X2, X3

Maximum Operating Voltage Value (V) / Module Temperature (°C)

# FIG. 5

Current

Amount Of Insolation $G_{std}$

$P_{max}(T_{std}, G_{std})$

Amount Of Insolation G1

$P_{max}(T1 \text{ or } G1)$

Voltage

Surface Temperature T1

Surface Temperature $T_{std}$

# FIG. 6

Start

Acquire Temperature Or Amount Of Insolation — S11

Estimate Maximum Power Point On Basis Of Acquired Temperature Or Acquired Amount Of Insolation — S12

Cause Array To Operate At Estimated Maximum Power Point — S13

End

FIG. 7

FIG. 8

EP 2 527 949 A1

FIG. 9

Abnormality Determining Section (41)

- Measurement Data Acquiring Section (31)
- Procedure Selecting Section (42)
- Failure Determining Section (44)
- Normalizing Section (45)
- Behavior Pattern Specifying Section (46)
- Behavior Pattern Diagnosis Section (47)
- Normalizing Function Creating Section (43)

Memory Section (50)

Abnormality Determination Database (70)

- Normalizing Function Memory Section (71)
- After-Normalization MPP History Memory Section (72)
- Behavior-Diagnosis Correspondence Information Memory Section (73)
- Failure History Memory Section (74)

MPP Measurement Data Memory Section (51)

FIG. 10

2

14
① — Pyrhelio meter

M22                                                    M21

② ─

15

| Module | Module | Module | | Module |
|---|---|---|---|---|
| ① ② DCDC Control Device 80 | ① ② DCDC Control Device 80 | ① ② DCDC Control Device 80 | Thermometer ② DCDC Control Device 80 Module | ① ② DCDC Control Device 80 |

19
~

| Module | Module | Module | Module | Module |
|---|---|---|---|---|
| ① ② DCDC Control Device 80 | ① ② DCDC Control Device 80 | ① ② DCDC Control Device 80 | ① ② DCDC Control Device 80 | ① ② DCDC Control Device 80 |

11
Power Conditioner

16
Load

12
Display

13
Input Device

| Module | Module | Module | Module | Module |
|---|---|---|---|---|
| ① ② DCDC Control Device 80 | ① ② DCDC Control Device 80 | ① ② DCDC Control Device 80 | ① ② DCDC Control Device 80 | ① ② DCDC Control Device 80 |

FIG. 11

EP 2 527 949 A1

FIG. 12

## FIG. 13

Inverter — 18

Load — 16

10

23

MPPT Controller

Control Section — 30

Measuring Instrument — 17

Ammeter — 17a

Voltmeter — 17b

Thermometer — 15

Pyrheliometer

14

Measurement Data Acquiring Section — 310

Abnormality Determining Section — 410

Search Control Section — 34

Procedure Selecting Section — 42

MPP Estimating Section — 35

Estimate Equation Computing Section — 32

Target Value Setting Section — 33

Display — 12

Input Device — 13

Memory Section — 50

MPP Measurement Data Memory Section — 51

Abnormality Determination Database — 700

Estimate Equation Memory Section — 61

Target Value Memory Section — 62

Rated Value Database — 60

38

FIG. 14

# FIG. 15

● Power On

63

| Failure History Memory Section | → | Failure History Determination Process | S21 | Failure Flag Found |

Failure Flag Not Found ① 

• Release Voltage
• Direct-Current
  Current Value
• Direct-Current
  Voltage Value
• Amount Of
  Insolation
• Temperature

→ Abnormality Determination Process S23

Abnormality Found? S24 — YES

NO S25

Operate Array At Estimated Maximum Power Point

Search For Maximum Power Point S22

Timer S26

Timer S27

①

## INTERNATIONAL SEARCH REPORT

| | International application No. |
|---|---|
| | PCT/JP2011/050399 |

A. CLASSIFICATION OF SUBJECT MATTER
*G05F1/67(2006.01)i, H01L31/04(2006.01)i, H01L31/042(2006.01)i*

According to International Patent Classification (IPC) or to both national classification and IPC

B. FIELDS SEARCHED

Minimum documentation searched (classification system followed by classification symbols)
G05F1/67, H01L31/04, H01L31/042

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 08-123563 A (Canon Inc.),<br>17 May 1996 (17.05.1996),<br>paragraphs [0024] to [0031], [0056] to [0062];<br>fig. 4 to 5<br>(Family: none) | 1-3,6-10<br>4-5 |
| P,X<br>P,A | JP 2010-061495 A (Nippon Telegraph And<br>Telephone Corp.),<br>18 March 2010 (18.03.2010),<br>paragraphs [0092] to [0113], [0121]; fig. 1<br>to 8<br>(Family: none) | 1-3,6-10<br>4-5 |
| A | JP 08-185235 A (Sharp Corp.),<br>16 July 1996 (16.07.1996),<br>paragraph [0005]<br>(Family: none) | 4-5 |

| ☒ Further documents are listed in the continuation of Box C. | ☐ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>21 February, 2011 (21.02.11) | Date of mailing of the international search report<br>01 March, 2011 (01.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/050399 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2000-181555 A  (NTT Facilities, Inc.), 30 June 2000 (30.06.2000), paragraphs [0037] to [0050]; fig. 1 to 4 (Family: none) | 1-10 |

Form PCT/ISA/210 (continuation of second sheet) (July 2009)

## INTERNATIONAL SEARCH REPORT

| International application No. |
| --- |
| PCT/JP2011/050399 |

---

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

---

**Box No. III        Observations where unity of invention is lacking (Continuation of item 3 of first sheet)**

This International Searching Authority found multiple inventions in this international application, as follows:

The matter common to the inventions in claims 1 - 10 pertains to MPPT controller and the contents of controlling motion thereof that are set forth in claim 1. However, the search revealed that the afore-said common matter is not novel, since said common matter is disclosed in the document 1: JP 08-123563 A (Canon Inc.), 17 May 1996 (17.05.1996), paragraphs [0024] - [0031], [0056] - [0062], fig. 4 - 5.

(continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

| **INTERNATIONAL SEARCH REPORT** | International application No. |
|---|---|
| | PCT/JP2011/050399 |

Continuation of Box No.III of continuation of first sheet(2)

As a result, the above-said common matter is not a special technical feature within the meaning of PCT Rule 13.2, second sentence, since said common matter does not make a contribution over the prior art. Therefore, since there is no matter common to all of the inventions in claims 1 - 10 and there is no other common matter which is considered to be a special technical feature within the meaning of PCT Rule 13.2, second sentence, any technical relationship within the meaning of PCT Rule 13 cannot be found among those inventions. Consequently, it is obvious that the inventions in claims 1 - 10 do not comply with the requirement of unity of invention.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11282553 A

- JP 2000181555 A